# EUROPEAN PATENT APPLICATION

(11) **EP 4 439 294 A1**
(43) Date of publication of application: **02.10.2024**
(21) Application number: 22895402.0
(22) Date of filing: 27.10.2022
(51) Int. Cl.: G06F 9/50, G06N 20/00

(54) **INFORMATION PROCESSING DEVICE, INFORMATION PROCESSING METHOD, AND PROGRAM**

(30) Priority: 22.11.2021 JP 2021189368
(71) Applicant: Sony Semiconductor Solutions Corporation, Atsugi-shi, Kanagawa 243-0014 (JP)
(72) Inventor: NAGAO, Shinichi, Atsugi-shi, Kanagawa 243-0014 (JP); TSUNETA, Hiroyuki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/040262
(87) International publication number: WO 2023/090119

(57) **Abstract**

An information processing device according to the present technology includes a determination processing unit that determines, according to a user's request for an application and a required specification of a software component constructing the application, a target to be an execution subject for each software component.

## Description

### TECHNICAL FIELD

The present technology relates to a technical field of an information processing device, an information processing method, and a program that distribute a software component for realizing an application to each device.

### BACKGROUND ART

In order to realize an application, it is necessary to deploy the application to an appropriate device.

### CITATION LIST

### PATENT DOCUMENT

Patent Document 1: Japanese Patent No. 6126193

### SUMMARY OF THE INVENTION

### PROBLEMS TO BE SOLVED BY THE INVENTION

For example, Patent Document 1 discloses a technology of selecting and automatically distributing an appropriate application according to operating system (OS) information on a terminal side.

However, in order to realize the application in a suitable environment, it is highly likely that it is not sufficient to simply select the application operating on the OS according to the OS information.

The present technology has been made in view of such a problem, and an object thereof is to provide an environment for appropriately realizing an application.

### SOLUTIONS TO PROBLEMS

An information processing device according to the present technology includes a determination processing unit that determines, according to a user's request for an application and a required specification of a software component constructing the application, a target to be an execution subject for each software component.

That is, the target (the device or the like to be the deployment destination) to be the execution subject of the software component is determined in consideration of not only the performance and the like of the device but also the user's request for the application.

### BRIEF DESCRIPTION OF DRAWINGS

Fig. 1 is a diagram illustrating a configuration example of an information processing system.
Fig. 2 is a diagram for describing each apparatus that registers and downloads an AI model or an AI application via a marketplace function provided in a cloud-side information processing device.
Fig. 3 is a diagram illustrating an example of a flow of processing executed by each device in a case where an AI model or an AI application is registered or downloaded via the marketplace function together with Fig. 4.
Fig. 4 is a diagram illustrating an example of a flow of processing executed by each device in a case where an AI model or an AI application is registered or downloaded via the marketplace function together with Fig. 3.
Fig. 5 is a diagram for describing a connection mode between a cloud-side information processing device and an edge-side information processing device.
Fig. 6 is a functional block diagram of the cloud-side information processing device.
Fig. 7 is a block diagram illustrating an internal configuration example of a camera.
Fig. 8 is a diagram illustrating a configuration example of an image sensor.
Fig. 9 is a block diagram illustrating a software configuration of a camera.
Fig. 10 is a block diagram illustrating an operation environment of a container in a case where a container technology is used.
Fig. 11 is a block diagram illustrating an example of a hardware configuration of the information processing device.
Fig. 12 is a diagram illustrating an example in which an AI application includes a plurality of SW components.
Fig. 13 is a diagram illustrating additional information on the SW components.
Fig. 14 is a diagram illustrating a storage unit and the like in which the SW component is deployed.
Fig. 15 is a diagram illustrating a plurality of SW components to be deployed.
Fig. 16 is a diagram illustrating a state in which the SW component is deployed in each storage unit.
Fig. 17 is a table illustrating a state in which a device as a deployment destination is different according to a user's request.
Fig. 18 is a flowchart illustrating a flow of processing executed by a cloud-side information processing device in a first embodiment.
Fig. 19 is a flowchart illustrating a flow of processing of determining a device as a deployment destination of the SW component.
Fig. 20 is a diagram illustrating a state in which a plurality of SW components having the same processing content is prepared in a second embodiment.
Fig. 21 is a diagram illustrating a state in which different SW components are respectively deployed in a plurality of cameras.
Fig. 22 is a flowchart illustrating a flow of processing executed by a cloud-side information processing device in the second embodiment.
Fig. 23 is a flowchart illustrating a flow of processing of determining a device as a deployment destination and an SW component to be deployed.
Fig. 24 is a diagram illustrating a flow of processing in other descriptions.
Fig. 25 is a diagram illustrating an example of a login screen for logging in to a marketplace.
Fig. 26 is a diagram illustrating an example of a developer-oriented screen presented to each developer who uses the marketplace.
Fig. 27 is a diagram illustrating an example of a user-oriented screen presented to an application using user who uses the marketplace.

### MODE FOR CARRYING OUT THE INVENTION

Hereinafter, embodiments of an information processing device according to the present technology will be described in the following order with reference to the accompanying drawings.
<1. Information Processing System>
<1-1. Overall System Configuration>
<1-2. Registration of AI model and AI application>
<1-3. Functional Overview of System>
<1-4. Configuration of Imaging Device>
<1-5. Hardware Configuration of Information Processing Device>
<2. First Embodiment>
<3. Second Embodiment>
<4. Third Embodiment>
<5. Others>
<6. Screen Example of Marketplace>
<7. Conclusion>
<8. Present Technology>

### <1. Information Processing System>

### <1-1. Overall System Configuration>

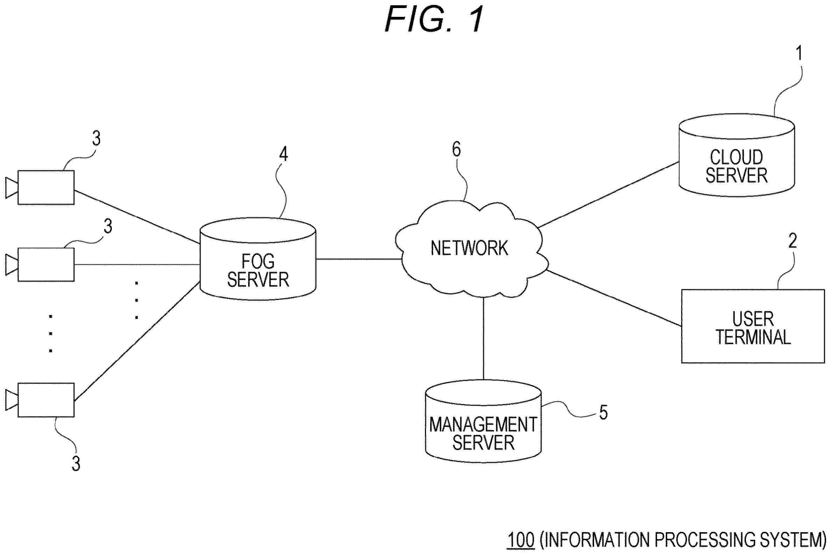

Fig. 1 is a block diagram illustrating a schematic configuration example of an information processing system 100 as an embodiment according to the present technology.

As illustrated, the information processing system 100 includes at least a cloud server 1, a user terminal 2, a plurality of cameras 3, a fog server 4, and a management server 5. In the present example, at least the cloud server 1, the user terminal 2, the fog server 4, and the management server 5 are configured to be able to perform communication with each other via a network 6 such as the Internet.

The cloud server 1, the user terminal 2, the fog server 4, and the management server 5 are configured as an information processing device that includes a microcomputer including a central processing unit (CPU), a read only memory (ROM), and a random access memory (RAM) .

Here, the user terminal 2 is an information processing device assumed to be used by a user who receives a service using the information processing system 100. Furthermore, the management server 5 is an information processing device assumed to be used by a service provider.

Each camera 3 includes, for example, an image sensor such as a charge coupled device (CCD) type image sensor or a complementary metal oxide semiconductor (CMOS) type image sensor, and images a subject to obtain image data (captured image data) as digital data. Furthermore, as described later, each camera 3 also has a function of performing processing (for example, image recognition processing, image detection processing, and the like) using artificial intelligence (AI) on the captured image. In the following description, various kinds of processing on an image, such as image recognition processing and image detection processing, will be simply referred to as "image processing". For example, various kinds of processing on an image using AI (or an AI model) will be referred to as "AI image processing".

Each camera 3 is configured to be capable of data communication with the fog server 4, and is capable of transmitting various kinds of data such as processing result information indicating a result of processing (image processing or the like) using AI to the fog server 4 and receiving various kinds of data from the fog server 4, for example.

Here, for the information processing system 100 illustrated in Fig. 1, for example, intended uses such as generating analysis information of a subject by the fog server 4 or the cloud server 1 on the basis of processing result information obtained by the image processing of each camera 3 and allowing the user to browse the generated analysis information via the user terminal 2 are assumed.

In this case, as the intended use of each camera 3, the intended uses of various monitoring cameras are conceivable. For example, intended uses of monitoring cameras for indoors such as stores, offices, and houses, monitoring cameras (including traffic monitoring cameras and the like) for monitoring outdoors such as parking lots, and streets, monitoring cameras for manufacturing lines in factory automation (FA) and industrial automation (IA), monitoring cameras for monitoring the inside and the outside of vehicles, and the like can be exemplified.

For example, in the case of the intended use of a monitoring camera in a store, it is conceivable to arrange a plurality of cameras 3 at predetermined positions in the store so that the user can check demographics of store visitors (gender, age group, and the like), actions (movement flow) within the store, and the like. In that case, as the analysis information described above, it is conceivable to generate information on the demographics of the store visitors, information on the movement flow in the store, information on a congestion state in a checkout register (for example, waiting time at checkout register), and the like.

Alternatively, in the case of the intended use of a traffic monitoring camera, it is conceivable to arrange each camera 3 at each position near a road so that the user can recognize information on the number (vehicle number), the color of the vehicle, the vehicle type, and the like of a passing vehicle. In this case, it is conceivable to generate information on the number, the color of the vehicle, the vehicle type, and the like as the analysis information described above.

Furthermore, in a case where a traffic monitoring camera is used in a parking lot, it is conceivable to arrange cameras so as to be able to monitor each parked vehicle, to monitor whether or not there is a suspicious person acting suspiciously around each vehicle, and to notify of the presence of a suspicious person, an attribute (gender and age group) of the suspicious person, and the like in a case where there is a suspicious person.

Moreover, it is also conceivable to monitor an empty space on the street or in the parking lot and to notify the user of a place of a space where a car can be parked.

It is assumed that the fog server 4 is arranged for each monitoring target, for example, arranged in the store as the monitoring target together with each camera 3 in the intended use of monitoring the store described above. By providing the fog server 4 for each monitoring target such as a store in this manner, the cloud server 1 does not need to directly receive transmission data from the plurality of cameras 3 in the monitoring target, and the processing load on the cloud server 1 is reduced.

Note that, in a case where there is a plurality of stores as the monitoring targets and all the stores belong to the same group, one fog server 4 may be provided for the plurality of stores instead of being provided for each store. That is, one fog server 4 is not limited to be provided for each monitoring target, and one fog server 4 can be provided for a plurality of monitoring targets. Note that, in a case where the function of the fog server 4 can be provided to the cloud server 1 or each camera 3 since the cloud server 1 or each camera 3 has a processing capability, the fog server 4 may not be provided in the information processing system 100, each camera 3 may be directly connected to the network 6, and the cloud server 1 may directly receive the transmission data from the plurality of cameras 3.

In the following description, the various devices described above can be roughly divided into a cloud-side information processing device and an edge-side information processing device.

The cloud server 1 and the management server 5 correspond to the cloud-side information processing device, and are in a device group that provides services assumed to be used by a plurality of users.

Furthermore, the camera 3 and the fog server 4 correspond to the edge-side information processing device, and can be regarded as a device group arranged in an environment prepared by a user who uses a cloud service.

Here, both the cloud-side information processing device and the edge-side information processing device may be in an environment prepared by the same user.

Note that the fog server 4 may be an on-premises server.

### <1-2. Registration of AI model and AI application>

As described above, in the information processing system 100, the camera 3 that is the edge-side information processing device performs the AI image processing, and the cloud server 1 that is the cloud-side information processing device realizes an advanced application function using the result information of the AI image processing on the edge side (for example, the result information of the image recognition processing using AI).

Here, various schemes of registering the application function in the cloud server 1 (or including the fog server 4) that is the cloud-side information processing device are considered.

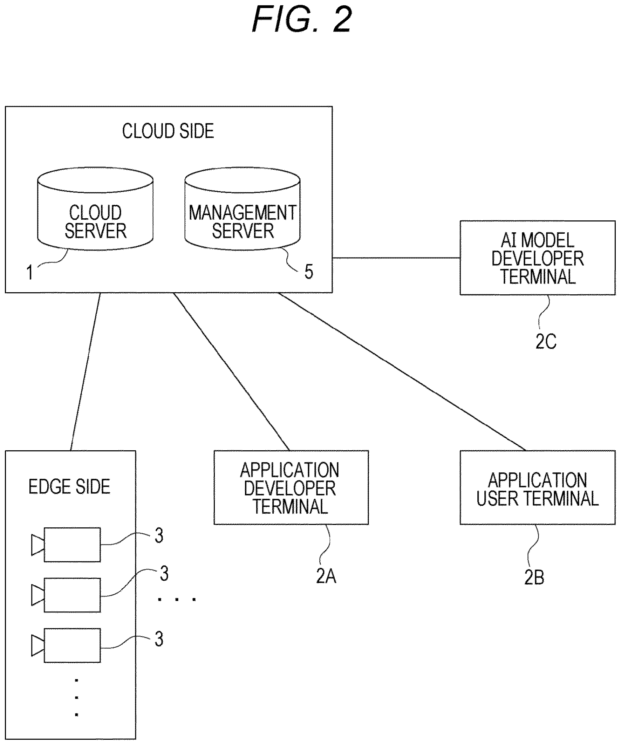

An example thereof will be described with reference to Fig. 2.

Note that the fog server 4 is not illustrated in Fig. 2, but a configuration including the fog server 4 may be adopted. In this case, the fog server 4 may share some of the functions on the edge side.

The above-described cloud server 1 and management server 5 are information processing devices that configure a cloud-side environment.

Furthermore, the camera 3 is an information processing device that configures an edge-side environment.

Note that the camera 3 can be perceived as a device including a control unit that performs overall control of the camera 3, and the camera 3 can be perceive as a device including another device as an image sensor IS including an arithmetic processing unit that performs various kinds of processing including the AI image processing on the captured image. That is, it may be perceived that the image sensor IS that is another edge-side information processing device is mounted inside the camera 3 that is the edge-side information processing device.

Furthermore, examples of the user terminal 2 used by the user who uses various services provided by the cloud-side information processing device include an application developer terminal 2A used by a user who develops an application used for AI image processing, an application user terminal 2B used by a user who uses an application, and an AI model developer terminal 2C used by a user who develops an AI model used for AI image processing.

Note that the application developer terminal 2A may be used by a user who develops an application that does not use the AI image processing.

In the cloud-side information processing device, a training dataset for performing training using AI is prepared. The user who develops the AI model performs communication with the cloud-side information processing device and downloads the training dataset using the AI model developer terminal 2C. At this time, the training dataset may be provided for a fee. For example, an AI model developer may purchase the training dataset in a state where various functions and materials registered in a marketplace (electronic market) can be purchased by registering personal information in the marketplace prepared as a cloud-side function.

The AI model developer develops the AI model using the training dataset, and then registers the developed AI model in the marketplace using the AI model developer terminal 2C. Therefore, an incentive may be paid to the AI model developer when the AI model is downloaded.

Furthermore, the user who develops an application downloads the AI model from the marketplace using the application developer terminal 2A, and develops the application (hereinafter, referred to as "AI application") using the AI model. At this time, as described above, an incentive may be paid to the AI model developer.

The application development user registers the developed AI application in the marketplace using the application developer terminal 2A. Therefore, an incentive may be paid to the user who has developed the AI application when the AI application is downloaded.

The user who uses the AI application performs an operation for deploying the AI application and the AI model from the marketplace to the camera 3 that is the edge-side information processing device managed by the user, using the application user terminal 2B. At this time, an incentive may be paid to the AI model developer.

Therefore, the AI image processing using the AI application and the AI model can be performed in the camera 3, and the camera 3 can not only capture an image but also detect a store visitor or detect a vehicle using the AI image processing.

Here, the deployment of the AI application and the AI model indicates that the AI application or the AI model is installed on a target (device) as an execution subject such that the target as the execution subject can use the AI application and the AI model, in other words, at least a part of the program as the AI application can be executed.

Furthermore, in the camera 3, attribute information of a store visitor may be able to be extracted from the captured image captured by the camera 3 using the AI image processing.

The attribute information is transmitted from the camera 3 to the cloud-side information processing device via the network 6.

A cloud application is deployed in the cloud-side information processing device, and each user can use the cloud application via the network 6. Then, in the cloud application, an application or the like for analyzing a movement flow of a store visitor using the attribute information or the captured image of the store visitor is prepared. Such a cloud application is uploaded by the application development user.

By using the cloud application for analyzing the movement flow using the application user terminal 2B, the application using user can analyze the movement flow of the store visitor for the user's own store and browse the analysis result. The browsing of the analysis result is performed, for example, by graphically presenting the movement flow of the store visitor on a map of the store.

Furthermore, the analysis result may be browsed by displaying the result of the movement flow analysis in a form of a heat map and presenting the density or the like of the store visitors.

Furthermore, these pieces of information may be sorted in display for each piece of the attribute information of the store visitor.

In the cloud-side marketplace, the AI model optimized for each user may be registered. For example, a captured image captured by the camera 3 arranged in a store managed by a certain user is appropriately uploaded and accumulated in the cloud-side information processing device.

In the information processing device of the cloud, whenever a certain number of uploaded captured images are accumulated, retraining processing of the AI model is executed, and processing of updating the AI model and re-registering the AI model in the marketplace is executed.

Note that the retraining processing of the AI model may be selected as an option by the user on the marketplace, for example.

For example, the AI model retrained using dark images from the camera 3 arranged in the store is deployed in the camera 3, and thus a recognition rate and the like of the image processing for the captured image captured in the dark place can be improved. Furthermore, the AI model retrained using bright images from the camera 3 arranged outside the store is deployed in the camera 3, and thus a recognition rate and the like of the image processing for the image captured in the bright place can be improved.

That is, the application using user can normally obtain the optimized processing result information by deploying again the updated AI model in the camera 3.

Note that the retraining processing of the AI model will be described later.

Furthermore, in a case where personal information is included in the information (such as a captured image) uploaded from the camera 3 to the cloud-side information processing device, the data from which the information associated with information regarding privacy has been deleted may be uploaded from the viewpoint of privacy protection, or the data from which the information associated with information regarding privacy has been deleted may be made available to the AI model development user or the application development user.

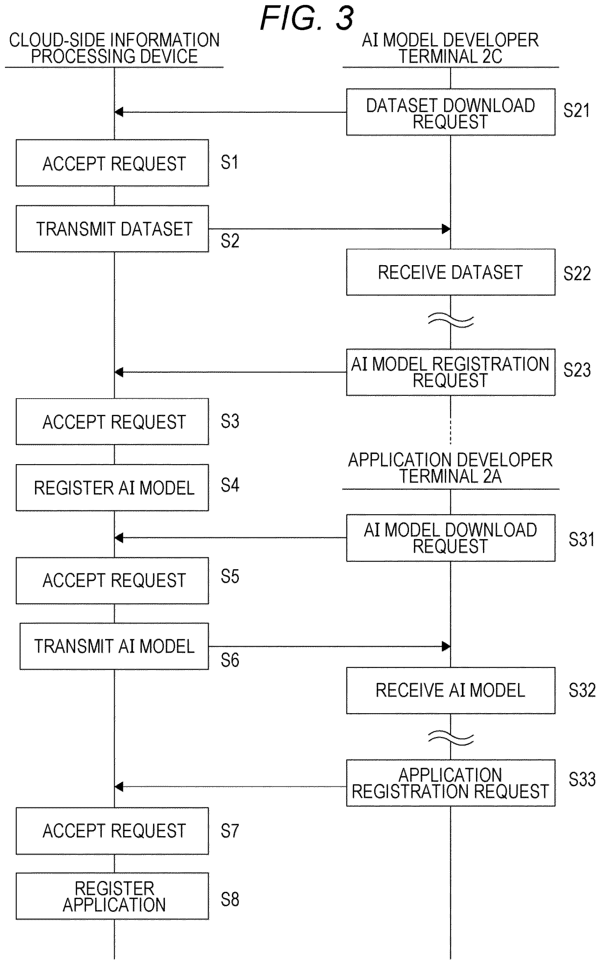

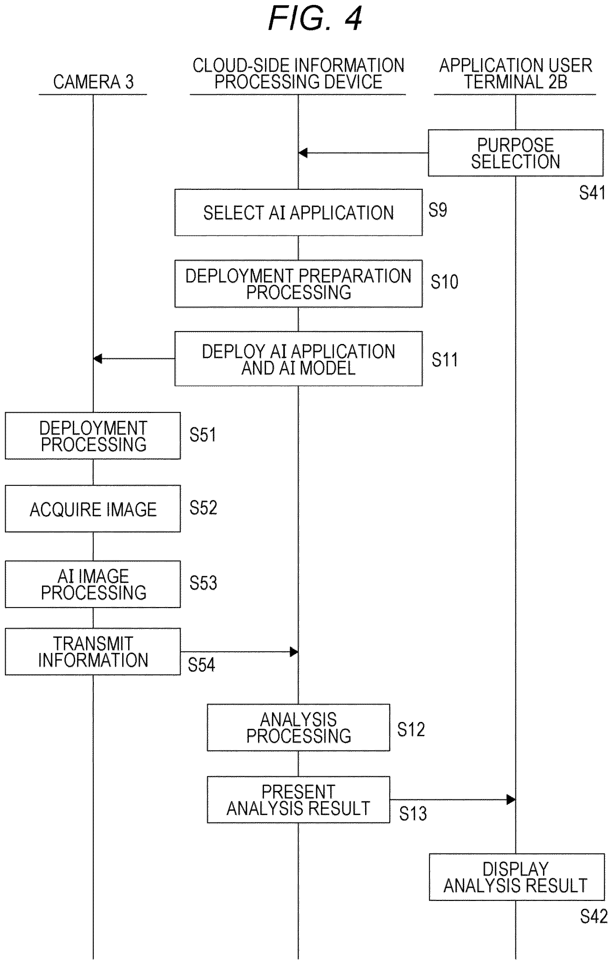

The flow of the processing described above is illustrated in the flowcharts of Figs. 3 and 4.

Note that the cloud-side information processing device corresponds to the cloud server 1, the management server 5, and the like in Fig. 1.

In response to the AI model developer browsing a list of datasets registered in the marketplace and selecting a desired data set using the AI model developer terminal 2C having a display unit configured with a liquid crystal display (LCD), an organic electro luminescence (EL) panel, or the like, the AI model developer terminal 2C transmits a download request for the selected dataset to the cloud-side information processing device in step S21.

In response to this, the cloud-side information processing device accepts the request in step S1, and performs processing of transmitting the requested dataset to the AI model developer terminal 2C in step S2.

The AI model developer terminal 2C performs processing of receiving the dataset in step S22. Therefore, the AI model developer can develop the AI model using the dataset.

After the AI model developer finishes developing the AI model, in a case where the AI model developer performs an operation for registering the developed AI model in the marketplace (for example, designating a name of an AI model, an address at which the AI model is placed, or the like), the AI model developer terminal 2C transmits a registration request of the AI model in the marketplace to the cloud-side information processing device in step S23.

In response to this, the cloud-side information processing device can display the AI model on the marketplace, for example, by accepting the registration request in step S3 and performing registration processing of the AI model in step S4. Therefore, a user other than the AI model developer can download the AI model from the marketplace.

For example, an application developer who attempts to develop an AI application browses a list of AI models registered in the marketplace using the application developer terminal 2A. In response to the operation (for example, operation of selecting one of the AI models on the marketplace) of the application developer, the application developer terminal 2A transmits a download request for the selected AI model to the cloud-side information processing device in step S31.

The cloud-side information processing device accepts the request in step S5, and transmits the AI model to the application developer terminal 2A in step S6.

The application developer terminal 2A receives the AI model in step S32. Therefore, the application developer can develop an AI application using an AI model developed by another person.

After the application developer finishes developing the AI application, in a case where the application developer performs an operation (for example, an operation of designating a name of an AI application, an address at which the AI model is placed, and the like) for registering the AI application in the marketplace, the application developer terminal 2A transmits a registration request of the AI application to the cloud-side information processing device in step S33.

The cloud-side information processing device can display the AI application on the marketplace, for example, by accepting the registration request in step S7 and registering the AI application in step S8. Therefore, a user other than the application developer can select the AI application on the marketplace, and download the AI application.

For example, as illustrated in Fig. 4, the user who intends to use the AI application performs purpose selection using the application user terminal 2B in step S41. In the purpose selection, a selected purpose is transmitted to the cloud-side information processing device.

In response to this, the cloud-side information processing device selects the AI application according to the purpose in step S9, and performs preparation processing (deployment preparation processing) for deploying the AI application or the AI model to each device in step S10.

In the deployment preparation processing, the AI model is determined or the like in accordance with information regarding the deploy considered to be a deployment processing target of the AI model or the AI application, for example, information regarding the camera 3 or the fog server 4, performance requested by the user, or the like.

Furthermore, in the deployment preparation processing, it is determined in which device each software (SW) component included in an AI application for realizing a function desired by the user is to be executed on the basis of performance information of each device and request information of the user.

Each SW component may be a container to be described later or may be a microservice. Note that the SW component can also be realized by using a web assembly technology.

In the case of an AI application that counts the number of store visitors for each attribute such as gender and age, an SW component that detects a face of a person from a captured image using the AI model, an SW component that extracts attribute information of the person from a detection result of the face, an SW component that aggregates the results, an SW component that visualizes an aggregation result, and the like are included.

Some examples of the deployment preparation processing will be described later.

In the cloud-side information processing device, processing of deploying each SW component in each device is performed in step S11. In this processing, the AI application and the AI model are transmitted to each device such as the camera 3.

In response to this, the camera 3 performs the deployment processing of the AI application and the AI model in step S51. Therefore, the AI image processing can be performed on the captured image captured by the camera 3.

Note that, although not illustrated in Fig. 4, the fog server 4 similarly performs the deployment processing of the AI application and the AI model as necessary.

However, in a case where all processing is executed in the camera 3, the deployment processing for the fog server 4 is not performed.

The camera 3 acquires an image by performing an imaging operation in step S52. Then, the camera 3 performs the AI image processing on the acquired image and obtains an image recognition result in step S53, for example.

The camera 3 performs processing of transmitting the captured image and the result information of the AI image processing in step S54. In the information transmission in step S54, both the captured image and the result information of the AI image processing may be transmitted, or only one of the captured image and the result information of the AI image processing may be transmitted.

The cloud-side information processing device that has received the information performs analysis processing in step S12. Through this analysis processing, for example, processing of a movement flow analysis of store visitors, a vehicle analysis for traffic monitoring, or the like is performed.

The cloud-side information processing device performs presentation processing of an analysis result in step S13. This processing is realized, for example, by the user using the cloud application described above.

In response to the presentation processing of the analysis result, the application user terminal 2B performs processing of displaying the analysis result on a monitor or the like in step S42.

With the processing so far, the user who is a user of the AI application can obtain the analysis result according to the purpose selected in step S41.

Note that the cloud-side information processing device may update the AI model after step S13. By updating and deploying the AI model, it is possible to obtain an analysis result suitable for the use environment of the user.

### <1-3. Functional Overview of System>

In the present embodiment, as a service in which the information processing system 100 is used, a service in which the user as a customer can select a type of function for the AI image processing of each camera 3 is assumed. In the selection of the type of function, for example, an image recognition function, an image detection function, or the like may be selected, or a more detailed type of function may be selected to exhibit an image recognition function or an image detection function for a specific subject.

For example, as a business model, a service provider sells the camera 3 or the fog server 4 that has an image recognition function by AI to the user, and causes the camera 3 or the fog server 4 to be installed at a location that is the monitoring target. Then, the service that provides the user with the analysis information as described above is deployed.

At this time, since the intended use required for the system is different for each customer such as the intended use of store monitoring or the intended use of traffic monitoring, the AI image processing function of the camera 3 can be selectively set such that the analysis information corresponding to the intended use required by the customer can be obtained.

In the present example, the management server 5 has a function of selectively setting such an AI image processing function of the camera 3.

Note that the cloud server 1 or the fog server 4 may have the function of the management server 5.

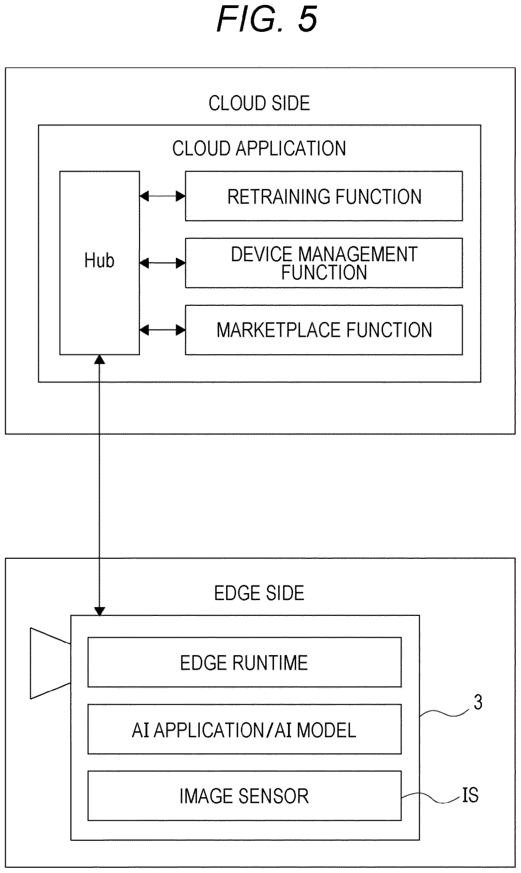

Here, the connection between the cloud server 1 or the management server 5 which is the cloud-side information processing device and the camera 3 which is the edge-side information processing device will be described with reference to Fig. 5.

A retraining function, a device management function, and a marketplace function which are functions available via a Hub are implemented in the cloud-side information processing device.

The Hub performs highly reliable communication protected for security with the edge-side information processing device. Therefore, various functions can be provided to the edge-side information processing device.

The retraining function is a function of performing retraining and providing a newly optimized AI model, and therefore, an appropriate AI model based on a new learning material is provided.

The device management function is a function of managing the camera 3 or the like as the edge-side information processing device, and can provide, for example, functions such as management and monitoring of the AI model deployed in the camera 3, and detection and troubleshooting of problems.

Furthermore, the device management function is also a function of managing the information regarding the camera 3 or the fog server 4. The information regarding the camera 3 or the fog server 4 is information of a chip used as an arithmetic processing unit, information such as a memory capacity, a storage capacity, and a usage rate of a CPU and a memory, information of software such as an operating system (OS) installed in each device, and the like.

Moreover, the device management function protects secure access by the authenticated user.

The marketplace function provides a function of registering the AI model developed by the AI model developer described above or the AI application developed by the application developer, a function of deploying these developments to a permitted edge-side information processing device, and the like. Furthermore, the marketplace function also provides a function related to payment of an incentive in response to the deployment of the development.

The camera 3 which is the edge-side information processing device includes an edge runtime, an AI application and an AI model, and an image sensor IS.

The edge runtime functions as embedded software or the like for managing the application deployed in the camera 3 or communicating with the cloud-side information processing device.

As described above, the AI model is obtained by deploying the AI model registered in the marketplace in the cloud-side information processing device, and thereby the camera 3 can obtain the result information of the AI image processing according to the purpose using the captured image.

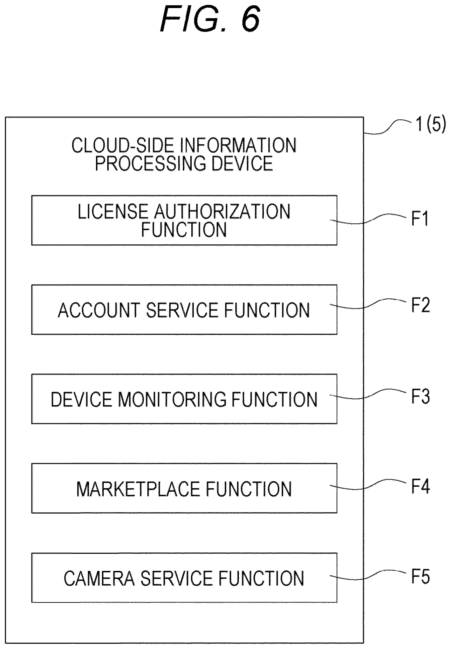

An outline of functions of the cloud-side information processing device will be described with reference to Fig. 6. Note that the cloud-side information processing device is a generic name of devices such as the cloud server 1 and the management server 5.

As illustrated, the cloud-side information processing device has a license authorization function F1, an account service function F2, a device monitoring function F3, a marketplace function F4, and a camera service function F5.

The license authorization function F1 is a function of performing processing related to various kinds of authentication. Specifically, in the license authorization function F1, processing related to device authentication of each camera 3 and processing related to authentication of each of the AI model, software, and firmware used for the camera 3 are performed.

Here, the software described above means software necessary for appropriately realizing the AI image processing in the camera 3.

In order to appropriately perform the AI image processing based on the captured image and to transmit the result of the AI image processing to the fog server 4 or the cloud server 1 in an appropriate format, it is requested to control the data input to the AI model and appropriately process the output data of the AI model. The software described above is software including peripheral processing necessary for appropriately realizing the AI image processing. Such software is software for realizing a desired function using an AI model and corresponds to the AI application described above.

Note that the AI application is not limited to one using only one AI model, and one using two or more AI models is also conceivable. For example, there may be an AI application having a flow of processing in which information (image data or the like, hereinafter referred to as "recognition result information") of a recognition result obtained by an AI model that executes the AI image processing with the captured image as the input data is input to another AI model and second AI image processing is executed.

In the license authorization function F1, for authentication of the camera 3, processing of issuing a device identification (ID) for each camera 3 is performed in a case where the camera 3 is connected via the network 6.

Furthermore, for authentication of the AI model and software, processing of issuing unique IDs (AI model ID, software ID) is performed for each of the AI model and the AI application for which registration is applied from the AI model developer terminal 2C and a software developer terminal 7.

Furthermore, in the license authorization function F1, processing of issuing various keys, certificates, and the like for enabling secure communication between the cloud server 1 and each of the camera 3, the AI model developer terminal 2C, and the software developer terminal 7 to a manufacturer of the camera 3 (particularly, a manufacturer of the image sensor IS to be described later), an AI model developer, and a software developer is performed.

Moreover, in the license authorization function F1, in a case where user registration (registration of account information accompanied by issuance of the user ID) is performed by the account service function F2 described below, processing of associating the camera 3 (the device ID described above) purchased by the user with the user ID is performed.

The account service function F2 is a function of generating and managing the account information of the user. In the account service function F2, input of the user information is accepted, and account information is generated on the basis of the input user information (generation of the account information including at least the user ID and password information is performed).

Furthermore, in the account service function F2, registration processing (registration of account information) for the AI model developer and the developer of the AI application (hereinafter referred to as "software developer" in some cases) is performed.

The device monitoring function F3 is a function of performing processing of monitoring a use state of the camera 3. For example, information such as usage rates of the CPU and the memory described above is monitored as various elements related to the use state of the camera 3, such as a location where the camera 3 is used, an output frequency of the output data of the AI image processing, and an empty space of the CPU and the memory used for the AI image processing.

The marketplace function F4 is a function of selling the AI model and the AI application. For example, the user can purchase the AI application and the AI model used by the AI application via a sales WEB site (sales site) provided by the marketplace function F4. Furthermore, the software developer can purchase the AI model for creating the AI application via the sales site described above.

The camera service function F5 is a function of providing the user with the service related to the use of the camera 3.

As one of camera service functions F5, for example, a function related to generation of the above-described analysis information can be exemplified. That is, it is a function of generating the analysis information of a subject on the basis of the processing result information of the image processing in the camera 3 and performing processing for allowing the user to browse the generated analysis information through the user terminal 2.

Furthermore, the camera service function F5 includes an imaging setting searching function. Specifically, the imaging setting searching function is a function of acquiring the recognition result information of the AI image processing from the camera 3 and searching for imaging setting information of the camera 3 using AI on the basis of the acquired recognition result information. Here, the imaging setting information broadly means setting information related to an imaging operation for obtaining the captured image. Specifically, the setting information widely includes optical settings such as a focus and a diaphragm, settings related to an operation of reading a captured image signal such as a frame rate, an exposure time, and a gain, and settings related to image signal processing on the read captured image signal such as gamma correction processing, noise reduction processing, and super-resolution processing.

Furthermore, the camera service function F5 also includes an AI model searching function. This AI model searching function is a function of acquiring the recognition result information of the AI image processing from the camera 3 and searching for an optimum AI model used for the AI image processing in the camera 3 using AI on the basis of the acquired recognition result information. Here, the searching of the AI model means processing of optimizing various processing parameters such as a weighting factor, setting information (for example, information such as a kernel size is included) related to a neural network structure, and the like, for example, in a case where the AI image processing is realized by a convolutional neural network (CNN) including a convolution operation.

Furthermore, the camera service function F5 includes a processing sharing determination function. In the processing sharing determination function, when the AI application is deployed in the edge-side information processing device, processing of determining a device to be the deployment destination in units of SW components is performed as the above-described deployment preparation processing. Note that some SW components may be determined to be executed in the cloud-side device, and in this case, the deployment processing may not be performed assuming that some SW components have already been deployed in the cloud-side device.

For example, as in the above-described example, in the case of the AI application including the SW component that detects the face of the person, the SW component that extracts the attribute information of the person, the SW component that aggregates the extraction result, and the SW component that visualizes the aggregation result, the camera service function F5 determines the image sensor IS of the camera 3 as the device to be the deployment destination for the SW component that detects the face of the person, determines the camera 3 as the device to be the deployment destination for the SW component that extracts the attribute information of the person, determines the fog server 4 as the device to be the deployment destination for the SW component that aggregates the extraction result, and determines that the SW component that visualizes the aggregation result is executed in the cloud server 1 without being newly deployed in the device.

In this way, the processing sharing in each device is determined by determining the deployment destination of each SW component.

Note that these determinations are made in consideration of specifications and performance of each device and the user's request.

By providing the imaging setting searching function and the AI model searching function as described above, the imaging setting that makes the result of AI image processing favorable can be performed, and the AI image processing using an appropriate AI model according to the actual use environment can be performed.

Then, in addition to this, by providing the processing sharing determination function, the AI image processing and the analysis processing for the AI image processing can be executed in an appropriate device.

Note that the camera service function F5 has an application setting function prior to the deployment of each SW component. The application setting function is a function of setting an appropriate AI application according to the user's purpose.

For example, an appropriate AI application is selected in response to the selection of the intended use such as store monitoring or traffic monitoring by the user. Therefore, the SW component constituting the AI application is determined spontaneously. Note that, as will be described later, there may be a plurality of types of combinations of SW components for realizing the user's purpose using the AI application, and in this case, one combination is selected according to the information of the edge-side information processing device and the user's request.

For example, in a case where the user has a purpose for monitoring a store, a combination of the SW components may be different between a case where the user's request focuses on privacy and a case where the user's request focuses on speed.

In the application setting function, in the user terminal 2 (corresponding to the application user terminal 2B illustrated in Fig. 2), processing of accepting an operation in which the user selects a purpose (application), processing of selecting an appropriate AI application according to the selected application, and the like are performed.

Here, in the above description, the configuration in which the license authorization function F1, the account service function F2, the device monitoring function F3, the marketplace function F4, and the camera service function F5 are realized by the cloud server 1 alone has been exemplified, but these functions may be configured to be shared and realized by a plurality of information processing devices. For example, it is conceivable that each of the functions described above is performed by one information processing device. Alternatively, a single function among the functions described above can be shared and performed by a plurality of information processing devices (for example, the cloud server 1 and the management server 5).

In Fig. 1, the AI model developer terminal 2C is an information processing device used by the developer of the AI model.

Furthermore, the software developer terminal 7 is an information processing device used by the developer of the AI application.

### <1-4. Configuration of Imaging Device>

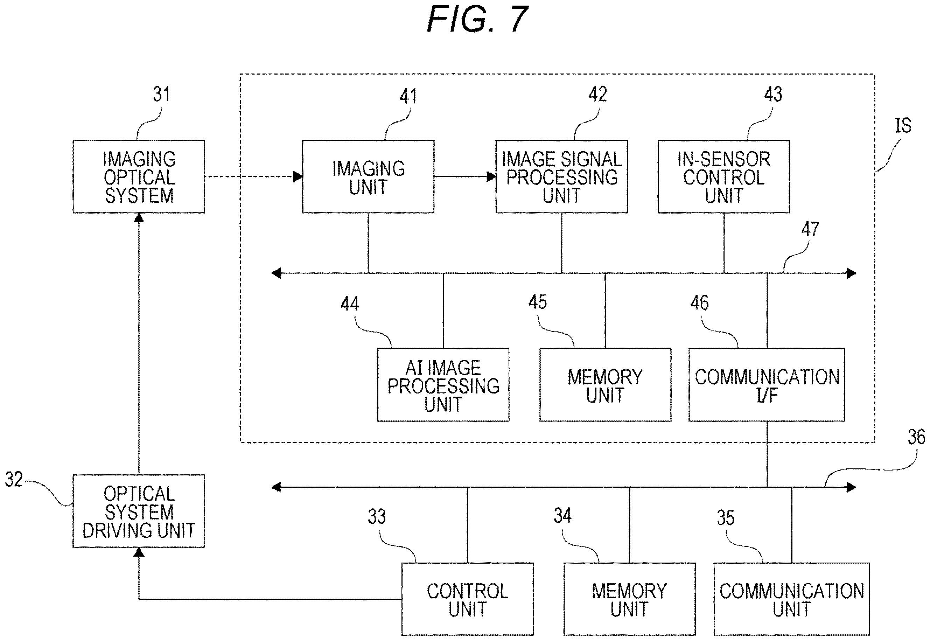

Fig. 7 is a block diagram illustrating an internal configuration example of the camera 3.

As illustrated, the camera 3 includes an imaging optical system 31, an optical system driving unit 32, the image sensor IS, a control unit 33, a memory unit 34, and a communication unit 35. The image sensor IS, the control unit 33, the memory unit 34, and the communication unit 35 are connected via a bus 36, and can perform data communication with each other.

The imaging optical system 31 includes lenses such as a cover lens, a zoom lens, and a focus lens, and a diaphragm (iris) mechanism. Light (incident light) from a subject is guided by the imaging optical system 31, and the light is condensed on a light reception surface of the image sensor IS.

The optical system driving unit 32 comprehensively indicates driving units of the zoom lens, the focus lens, and the diaphragm mechanism included in the imaging optical system 31. Specifically, the optical system driving unit 32 includes an actuator for driving each of the zoom lens, the focus lens, and the diaphragm mechanism, and a driving circuit of the actuator.

The control unit 33 includes, for example, a microcomputer that includes a CPU, a ROM, and a RAM, and performs control of the entire camera 3 by causing the CPU to execute various kinds of processing in accordance with a program stored in the ROM or a program loaded to the RAM.

Furthermore, the control unit 33 gives a driving instruction for the zoom lens, the focus lens, the diaphragm mechanism, and the like to the optical system driving unit 32. The optical system driving unit 32 executes the movement of the focus lens and the zoom lens, the opening and closing of diaphragm blades of the diaphragm mechanism, and the like in response to these driving instructions.

Furthermore, the control unit 33 performs control for the writing and reading of various kinds of data with respect to the memory unit 34.

The memory unit 34 is a nonvolatile storage device such as a hard disk drive (HDD) or a flash memory device, for example, and is used as a storage destination (recording destination) of the image data output from the image sensor IS.

Moreover, the control unit 33 performs communication of various kinds of data with an external device via the communication unit 35. The communication unit 35 in the present example is configured to be able to perform data communication with at least the fog server 4 (or the cloud server 1) illustrated in Fig. 1.

The image sensor IS is configured as, for example, a CCD or CMOS image sensor.

The image sensor IS includes an imaging unit 41, an image signal processing unit 42, an in-sensor control unit 43, an AI image processing unit 44, a memory unit 45, and a communication I/F 46, and these units can perform data communication with each other via a bus 47.

The imaging unit 41 includes a pixel array unit in which pixels each having a photoelectric conversion element such as a photodiode are two-dimensionally arranged, and a reading circuit that reads an electric signal obtained by photoelectric conversion from each pixel included in the pixel array unit, and can output the electric signal as a captured image signal.

The reading circuit executes, for example, correlated double sampling (CDS) processing, automatic gain control (AGC) processing, and the like on the electric signal obtained through photoelectric conversion, and further executes analog/digital (A/D) conversion processing.

The image signal processing unit 42 performs preprocessing, synchronization processing, YC generation processing, resolution conversion processing, codec processing, and the like on the captured image signal as digital data after the A/D conversion processing.

In the preprocessing, clamp processing of clamping black levels of R, G, and B to a predetermined level, correction processing between color channels of R, G, and B, and the like are performed on the captured image signal. In the synchronization processing, color separation processing is performed such that image data for each pixel has all the R, G, and B color components. For example, in the case of an imaging element using a Bayer array color filter, demosaic processing is performed as the color separation processing. In the YC generation processing, a luminance (Y) signal and a color (C) signal are generated (separated) from the image data of R, G, and B. In the resolution conversion processing, the resolution conversion processing is executed on the image data that has subjected to various kinds of signal processing.

In the codec processing, for example, encoding processing for recording or communication and file generation are performed on the image data subjected to the various kinds of processing described above. In the codec processing, it is possible to perform the file generation in a format such as moving picture experts group (MPEG)-2 or H.264 as a moving image file format. It is also conceivable to perform the file generation in a format such as joint photographic experts group (JPEG), tagged image file format (TIFF), or graphics interchange format (GIF) as a still image file.

The in-sensor control unit 43 gives an instruction to the imaging unit 41 to perform execution control of the imaging operation. Similarly, the execution control of processing is also performed on the image signal processing unit 42.

The AI image processing unit 44 performs the image recognition processing as the AI image processing on the captured image.

The image recognition function using AI can be realized using a programmable arithmetic processing device such as a CPU, a field programmable gate array (FPGA), or a digital signal processor (DSP).

The image recognition function that can be realized in the AI image processing unit 44 can be switched by changing an algorithm for the AI image processing. In other words, a function type of the AI image processing can be switched by switching the AI model used for the AI image processing. Although various types of functions of the AI image processing are conceivable, for example, the following types can be exemplified.
-Class identification
-Semantic segmentation
-Human detection
-Vehicle detection
-Target tracking
·Optical character recognition (OCR)

Among the function types described above, the class identification is a function of identifying a target class. In this context, the term "class" refers to information indicating a category of an object, and distinguishes, for example, "person", "car", "airplane", "ship", "truck", "bird", "cat", "dog", "deer", "frog", "horse", and the like.

The target tracking is a function of tracking a targeted subject, and can be described as a function of obtaining history information of the position of the subject.

The memory unit 45 is used as a storage destination for various kinds of data such as captured image data obtained by the image signal processing unit 42. Furthermore, in the present example, the memory unit 45 can also be used for temporary storage of the data used by the AI image processing unit 44 in the course of the AI image processing.

Furthermore, the memory unit 45 stores information regarding the AI application and the AI model used in the AI image processing unit 44.

Note that the information regarding the AI application and the AI model may be deployed in the memory unit 45 as a container or the like using a container technology described later, or may be deployed using a microservice technology. By deploying the AI model used for the AI image processing in the memory unit 45, the function type of the AI image processing can be changed, or the AI model can be changed to an AI model of which performance is improved by retraining.

Note that, as described above, in the present embodiment, the description has been made based on the example for the AI model and the AI application used for the image recognition, but the present invention is not limited thereto, and a program and the like executed using the AI technology may be targeted.

Furthermore, in a case where a capacity of the memory unit 45 is small, the information regarding the AI application and the AI model may be deployed in a memory other than the image sensor IS, such as the memory unit 34 or the like as a container or the like using the container technology, and then only the AI model may be stored in the memory unit 45 in the image sensor IS via the communication I/F 46 to be described later.

The communication I/F 46 is an interface that communicates with the control unit 33, the memory unit 34, and the like outside of the image sensor IS. The communication I/F 46 performs communication for acquiring a program executed by the image signal processing unit 42, an AI application or an AI model used by the AI image processing unit 44, and the like from the outside, and stores the program, the AI application, the AI model, and the like in the memory unit 45 included in the image sensor IS.

Therefore, the AI model is stored in a part of the memory unit 45 included in the image sensor IS and can be used by the AI image processing unit 44.

The AI image processing unit 44 recognizes a subject according to a purpose by performing predetermined image recognition processing using the AI application or the AI model obtained in this manner.

The recognition result information of the AI image processing is output to the outside of the image sensor IS via the communication I/F 46.

That is, not only the image data output from the image signal processing unit 42 but also the recognition result information of the AI image processing is output from the communication I/F 46 of the image sensor IS.

Note that only one of the image data and the recognition result information can also be output from the communication I/F 46 of the image sensor IS.

For example, in a case where the retraining function of the above-described AI model is used, captured image data used for the retraining function is uploaded from the image sensor IS to the cloud-side information processing device via the communication I/F 46 and the communication unit 35.

Furthermore, in a case where inference is performed using an AI model, recognition result information of the AI image processing is output from the image sensor IS to another information processing device other than the camera 3 via the communication I/F 46 and the communication unit 35.

Various configurations of the image sensor IS can be considered. Here, an example in which the image sensor IS has a structure in which two layers are stacked will be described.

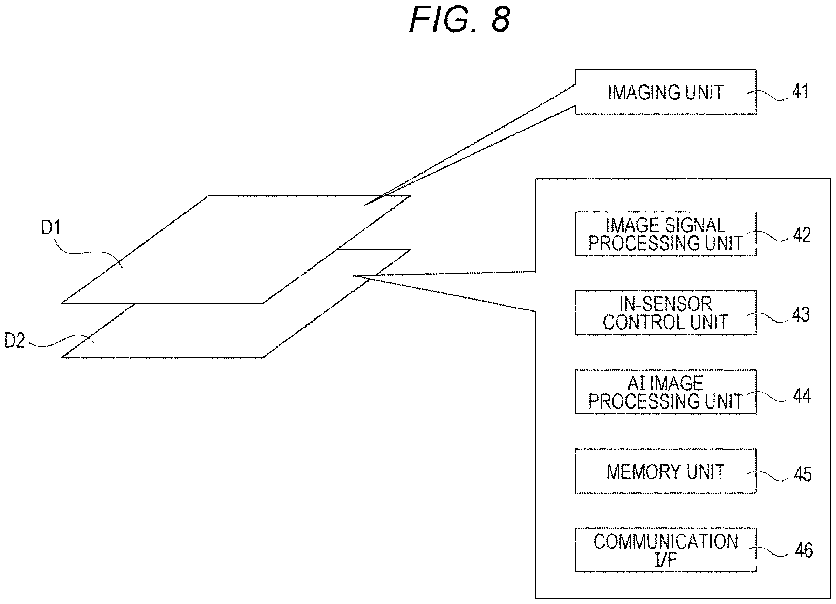

As illustrated in Fig. 8, the image sensor IS is configured as a one-chip semiconductor device in which two dies are stacked.

The image sensor IS is configured such that a die D1 having a function as the imaging unit 41 illustrated in Fig. 7 and a die D2 are stacked, the die D2 including the image signal processing unit 42, the in-sensor control unit 43, the AI image processing unit 44, the memory unit 45, and the communication I/F 46.

The die D1 and the die D2 are electrically connected by, for example, Cu-Cu bonding.

Various methods of deploying the AI model, the AI application, and the like in the camera 3 can be considered. As an example, an example using a container technology will be described.

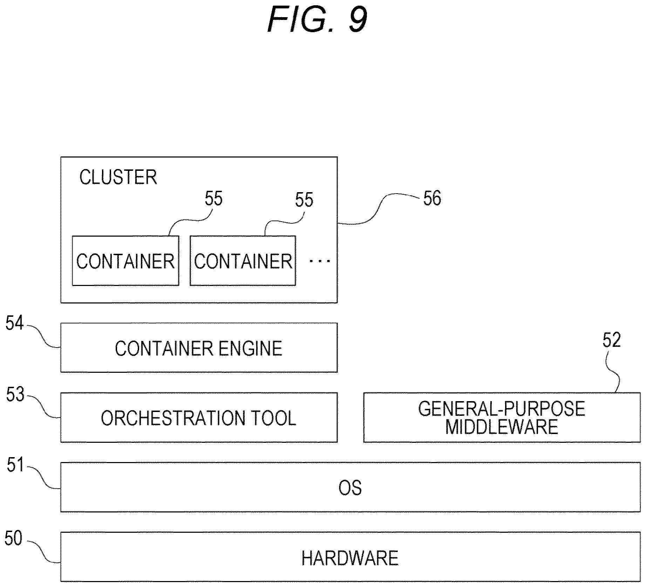

In the camera 3, an operation system 51 is installed on various types of hardware 50 such as a CPU, a graphics processing unit (GPU), a ROM, and a RAM as the control unit 33 illustrated in Fig. 7 (refer to Fig. 9).

The operation system 51 is basic software that performs control of the entire camera 3 in order to realize various functions in the camera 3.

A general-purpose middleware 52 is installed on the operation system 51.

The general-purpose middleware 52 is, for example, software realizing basic operations such as a communication function using the communication unit 35 serving as the hardware 50 and a display function using a display unit (monitor or the like) serving as the hardware 50.

On the operation system 51, not only the general-purpose middleware 52 but also an orchestration tool 53 and a container engine 54 are installed.

The orchestration tool 53 and the container engine 54 deploy and execute containers 55 by constructing a cluster 56 as an operation environment of the containers 55.

Note that the edge runtime illustrated in Fig. 5 corresponds to the orchestration tool 53 and the container engine 54 illustrated in Fig. 9.

The orchestration tool 53 has a function of causing the container engine 54 to appropriately allocate resources of the above-described hardware 50 and operation system 51. Each container 55 is collected in a predetermined unit (pod to be described later) by the orchestration tool 53, and each pod is deployed to a worker node (to be described later) which is a logically different area.

The container engine 54 is one of middleware installed in the operation system 51 and is an engine that operates the container 55. Specifically, the container engine 54 has a function of allocating resources (memories, calculation capacities, and the like) of the hardware 50 and the operation system 51 to the containers 55 on the basis of setting files or the like included in the middleware inside the container 55.

Furthermore, in the present embodiment, the allocated resources include not only resources such as the control unit 33 included in the camera 3 but also resources such as the in-sensor control unit 43, the memory unit 45, and the communication I/F 46 included in the image sensor IS.

The container 55 includes an application for realizing a predetermined function and middleware such as a library.

The container 55 operates to realize a predetermined function using resources of the hardware 50 and the operation system 51 allocated by the container engine 54.

In the present embodiment, the AI application and the AI model illustrated in Fig. 5 correspond to one of the containers 55. That is, one of the various containers 55 deployed in the camera 3 realizes a predetermined AI image processing function using the AI application and the AI model.

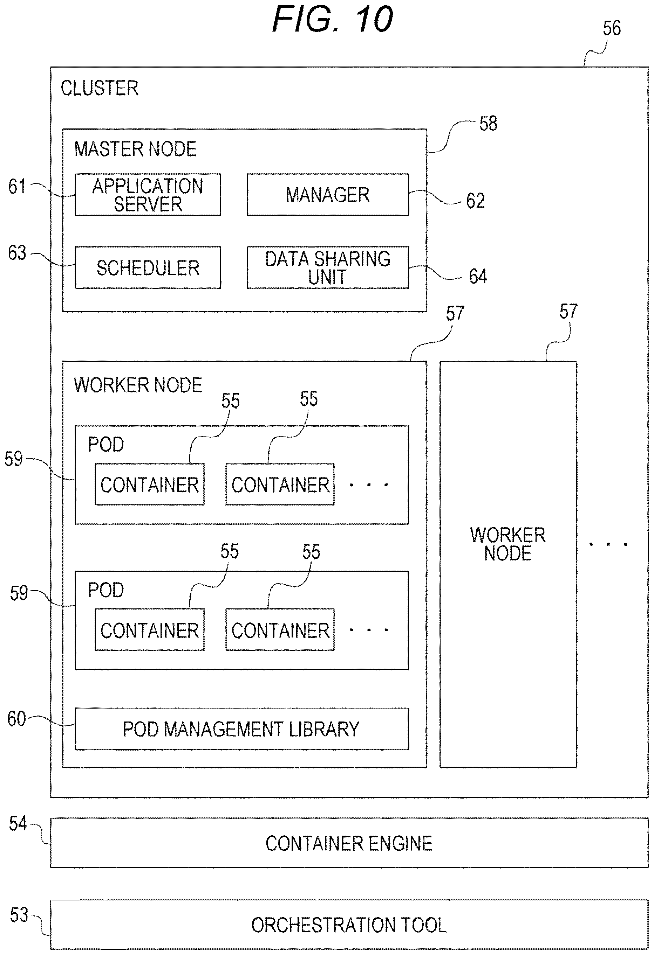

A specific configuration example of the cluster 56 constructed by the container engine 54 and the orchestration tool 53 will be described with reference to Fig. 10. Note that the cluster 56 may be constructed across a plurality of apparatuses such that functions are realized using not only the hardware 50 included in one camera 3 but also resources of other hardware included in other devices.

The orchestration tool 53 manages the execution environment of the container 55 in units of worker nodes 57. Furthermore, the orchestration tool 53 constructs a master node 58 that manages the entire worker node 57.

In the worker node 57, a plurality of pods 59 is deployed. The pod 59 includes one or a plurality of containers 55 and realizes a predetermined function. The pod 59 is a management unit for managing the container 55 by the orchestration tool 53.

The operation of the pod 59 in the worker node 57 is controlled by a pod management library 60.

The pod management library 60 has a container runtime for causing the pod 59 to use the logically allocated resource of the hardware 50, an agent that accepts control from the master node 58, a network proxy that performs communication between the pods 59 and communication with the master node 58, and the like.

That is, each pod 59 can realize a predetermined function using each resource by the pod management library 60.

The master node 58 includes an application server 61 that deploys the pod 59, a manager 62 that manages a deployment state of the container 55 by the application server 61, a scheduler 63 that determines the worker node 57 in which the container 55 is arranged, and a data sharing unit 64 that performs data sharing.

By using the configurations illustrated in Figs. 9 and 10, the above-described AI application and AI model can be deployed in the image sensor IS of the camera 3 using the container technology.

Note that, as described above, the AI model may be stored in the memory unit 45 in the image sensor IS via the communication I/F 46 in Fig. 7, and the AI image processing may be executed in the image sensor IS. Alternatively, the configurations illustrated in Figs. 9 and 10 may be deployed in the memory unit 45 and the in-sensor control unit 43 in the image sensor IS, and the AI application and the AI model described above may be executed in the image sensor IS using the container technology.

Furthermore, as will be described later, the container technology can also be used in a case where the AI application and/or the AI model is deployed in the fog server 4 or the cloud-side information processing device.

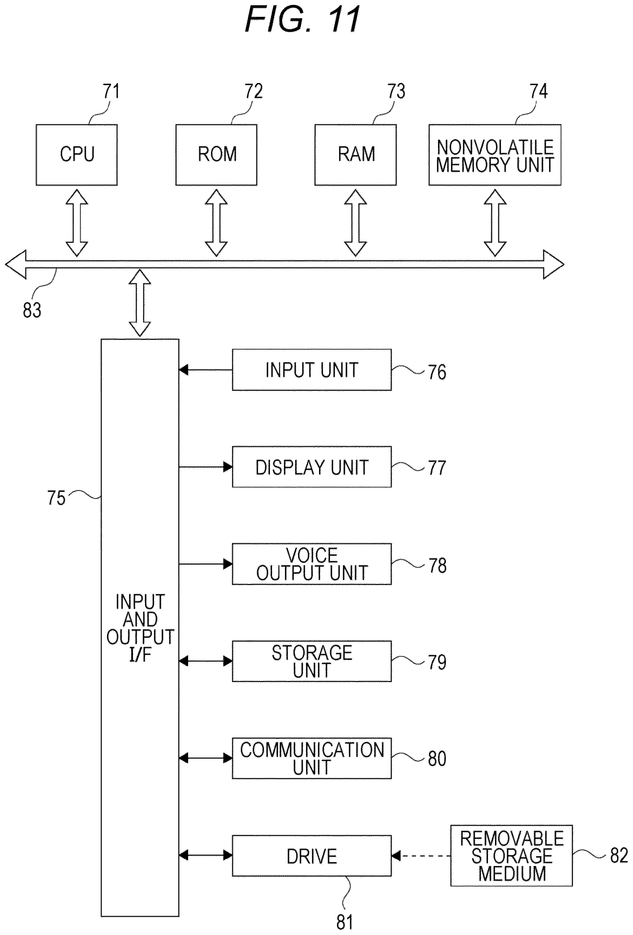

In this case, the information regarding the AI application and the AI model is executed by being deployed in a memory such as a nonvolatile memory unit 74, a storage unit 79, or a RAM 73 illustrated in Fig. 11 to be described later, as a container or the like.

### <1-5. Hardware Configuration of Information Processing Device>

The hardware configuration of the information processing device such as the cloud server 1, the user terminal 2, the fog server 4, and the management server 5 included in the information processing system 100 will be described with reference to Fig. 11.

The information processing device includes a CPU 71. The CPU 71 functions as an arithmetic processing unit that performs the above-described various kinds of processing, and executes various kinds of processing in accordance with a program stored in the nonvolatile memory unit 74 such as a ROM 72 or, for example, an electrically erasable programmable read-only memory (EEP-ROM), or a program loaded from the storage unit 79 to the RAM 73. The RAM 73 also appropriately stores data and the like necessary for the CPU 71 to execute the various kinds of processing.

Note that the CPU 71 included in the information processing device serving as the cloud server 1 functions as a license authorization unit, an account service providing unit, a device monitoring unit, a marketplace function providing unit, and a camera service providing unit in order to realize the various functions described above.

The CPU 71, the ROM 72, the RAM 73, and the nonvolatile memory unit 74 are connected to each other via a bus 83. An input and output interface (I/F) 75 is also connected to the bus 83.

An input unit 76 including an operator and an operation device is connected to the input and output interface 75.

For example, as the input unit 76, various kinds of operators and operation devices such as a keyboard, a mouse, a key, a dial, a touch panel, a touch pad, and a remote controller are assumed.

A user's operation is detected by the input unit 76, and a signal corresponding to the input operation is interpreted by the CPU 71.

Furthermore, a display unit 77 including an LCD, an organic EL panel, or the like, and a voice output unit 78 including a speaker or the like are connected to the input and output interface 75 integrally or separately.

The display unit 77 is a display unit that performs various kinds of display, and includes, for example, a display device provided in a housing of a computer device, a separate display device connected to the computer device, or the like.

The display unit 77 executes display of an image for various kinds of image processing, a moving image as a processing target, or the like on a display screen on the basis of an instruction of the CPU 71. Furthermore, the display unit 77 displays various kinds of operation menus, icons, messages, and the like, that is, displays as a graphical user interface (GUI) on the basis of an instruction of the CPU 71.

There is a case where the storage unit 79 including a hard disk, a solid-state memory, and the like, and a communication unit 80 including a modem and the like are connected to the input and output interface 75.

The communication unit 80 performs communication processing via a transmission path such as the Internet, wired/wireless communication with various apparatuses, and communication using bus communication or the like.

A drive 81 is also connected to the input and output interface 75 as necessary, and a removable storage medium 82 such as a magnetic disk, an optical disk, a magneto-optical disk, or a semiconductor memory is appropriately mounted.

A data file such as a program used for each processing can be read from the removable storage medium 82 by the drive 81. The read data file is stored in the storage unit 79, and images and voice included in the data file are output by the display unit 77 and the voice output unit 78. Furthermore, a computer program and the like read from the removable storage medium 82 are installed in the storage unit 79 as necessary.

In this computer device, for example, software for the processing of the present embodiment can be installed via network communication by the communication unit 80 or the removable storage medium 82. Alternatively, the software may be stored in advance in the ROM 72, the storage unit 79, or the like.

Furthermore, the captured image captured by the camera 3 and the processing result by the AI image processing may be received, and may be stored in the storage unit 79 or in the removable storage medium 82 via the drive 81.

The CPU 71 executes information processing and communication processing necessary for the cloud server 1 which is the information processing device including the above-described arithmetic processing unit by performing the processing operations on the basis of the various programs.

Note that the cloud server 1 is not limited to a single computer device as illustrated in Fig. 6, and may be configured by systematizing a plurality of computer devices. The plurality of computer devices may be systematized by a local area network (LAN) or the like, or may be disposed in a remote place by a virtual private network (VPN) or the like using the Internet or the like. The plurality of computer devices may include a computer device as a server group (cloud) that can be used by a cloud computing service.

### <2. First Embodiment>

An example of the deployment preparation processing in step S10 and the deployment processing of the AI application and the AI model in step S11 executed by the cloud-side information processing device will be described.

In the first embodiment, the cloud-side information processing device determines a device to be the deployment destination for each SW component in accordance with the specification and capability of the edge-side information processing device and the user's request, and presents the user with the analysis result suitable for the environment of the edge-side information processing device (that is, the environment of the user).

In the present example, one AI application is selected on the basis of the application selected by the user from among a plurality of AI applications A1, A2, ..., and AN. Note that the selection of the AI application also means selection of the AI model.

In the AI application, a plurality of SW components (containers and microservices) is defined to realize a specific function. Note that the SW component included in the AI application may be the same SW component as those included in other AI applications.

The cloud-side information processing device determines an appropriate device in which each SW component is to be deployed according to a required specification set for each of the plurality of SW components B1, B2, ..., and Bn.

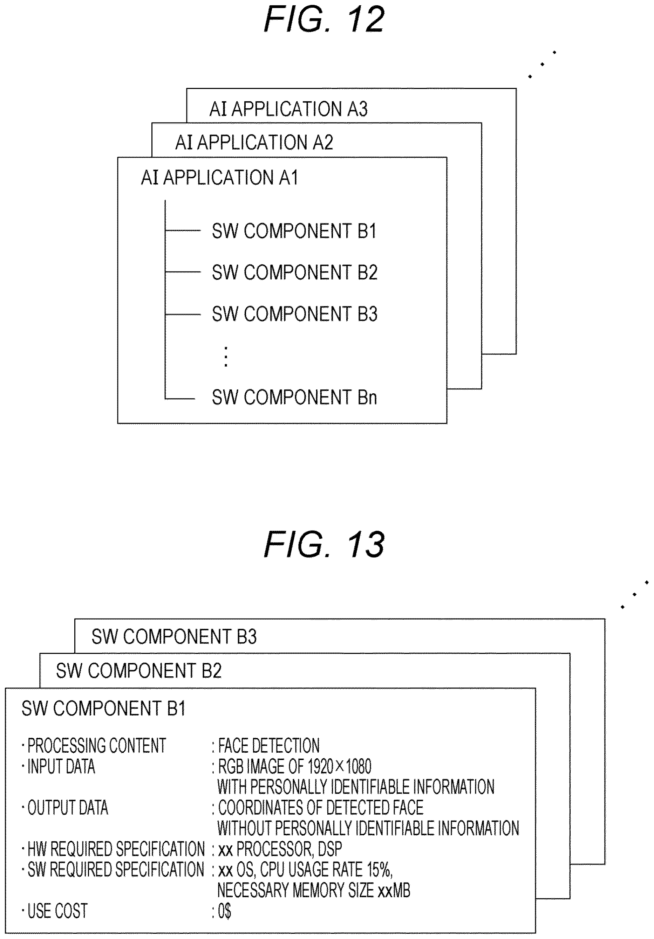

This will be specifically described with reference to Figs. 12 and 13.

Fig. 12 illustrates a plurality of AI applications A1, A2, and the like and a plurality of SW components defined for each AI application.

In the AI application A1, SW components B1, B2, B3, ..., and Bn are defined. In other words, by executing the SW components B1, B2, B3, ..., and Bn in a predetermined order, a desired function as the AI application A1 can be realized.

As illustrated in Fig. 13, the SW component B1 is accompanied by information (additional information) including a required specification and the like for determining a device in which the SW component B1 is to be deployed, together with a program for realizing desired processing.

As the additional information of the SW component B1, "processing content", "input data", "output data", "hardware (HW) required specification", "SW required specification", "use cost", and the like are set. Note that, for example, other additional information such as "accuracy of inference" may be included.

The "processing content" indicates content of processing executed by the SW component, and the processing content of the SW component B1 is "face detection".

The "input data" indicates a specification and the like of data input to the SW component, and the input data of the SW component B1 is an RGB image of 1920×1080. Note that a larger image may be used, and in this case, an SW component that performs resolution conversion may be used, or the SW component B1 may be enabled to perform resolution conversion processing.

Note that, in consideration of using the resolution conversion processing in another AI application, it is preferable to separately provide an SW component that performs the resolution conversion.

Furthermore, it can be seen that the input data of the SW component B1 includes information (personally identifiable information) that can identify an individual. The information on the presence or absence of the personally identifiable information is information used in a case where it is required by the user to preferentially realize privacy protection.

Note that the "input data" can be regarded as the SW required specification.

The "output data" indicates a specification and the like of data output from the SW component, and the output data of the SW component B1 is coordinate information of the detected face. Furthermore, it can be seen that the output data does not include the personally identifiable information.

That is, even in a case where the subsequent-stage SW component that receives the output data of the SW component B1 and performs processing is deployed in either the edge-side information processing device or the cloud-side information processing device, privacy issues do not arise.

The "hardware (HW) required specification" is a specification of the HW required for a device in which the SW component is to be deployed, and a xx processor and a DSP are necessary for the HW required specification of the SW component B1.

The "software (SW) required specification" is a specification of the SW required for a device in which the SW component is to be deployed, and the SW required specification of the SW component B1 indicates that xx OS needs to be installed, the CPU usage rate needs to be 15%, and the necessary memory size needs to be xx MB. That is, it can be seen that there is a possibility that the processing of the SW component B1 cannot be appropriately executed in a case where the CPU usage rate is 85% or more in the state before the SW component B1 is deployed.

The "use cost" is the cost necessary for using the SW component, and indicates that no cost is required after the SW component is deployed in the device.

Note that the introduction cost may be included as the additional information separately from the use cost. The introduction cost is, for example, the cost to be paid when the SW component B1 is purchased using the above-described marketplace function.

The SW component includes, in addition to the SW component that performs the exemplified "face detection", an SW component and the like that perform "head detection", "posture detection", "attribute detection", and "result aggregate".

An example of determining a device in which the SW component is to be deployed on the basis of the additional information will be described.

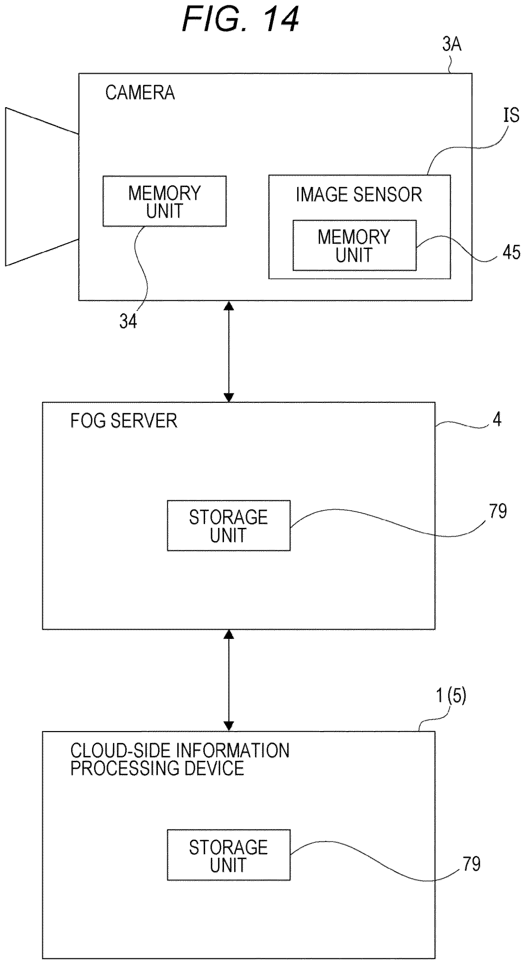

Fig. 14 illustrates a device to be a deployment destination of the SW component, in other words, an excerpt of a storage unit in which a programs as the SW component is stored.

Specifically, as the storage unit of the edge-side information processing device, the information processing system 100 includes the memory unit 34 included in a camera 3A, the memory unit 45 of the image sensor IS included inside the camera 3A, the storage unit 79 of the fog server 4, and each storage unit 79 included in the cloud server 1 and the management server 5 as the cloud-side information processing device.

Note that, although one camera 3A is illustrated in the drawing, the memory unit 34 and the memory unit 45 are candidates for the deployment destination as many as the number of cameras 3 used for the intended use.

Furthermore, a plurality of fog servers 4 may be provided as necessary.

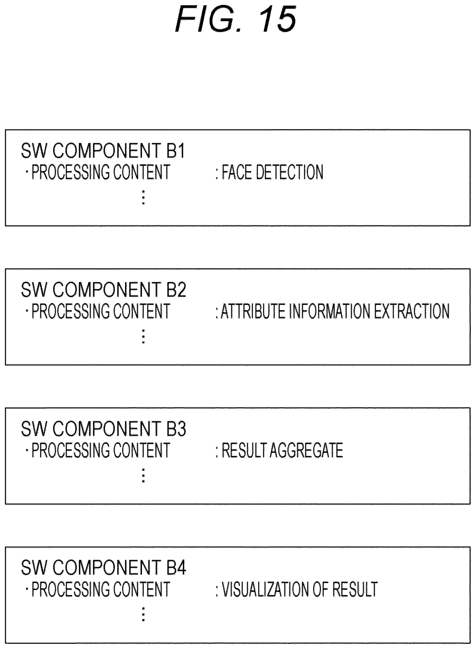

Fig. 15 illustrates a part of the contents of the SW components B1, B2, B3, and B4 for realizing the function of the AI application Al deployed in the device.

The SW component B1 is a program for performing face detection, the SW component B2 is a program for extracting the attribute information of a person, the SW component B3 is a program for aggregating a counting result of the number of people, and the SW component B4 is a program for visualizing the aggregation result.

Furthermore, as illustrated in Fig. 13, the SW component B1 performs processing using the information including the personally identifiable information as the input data, and outputs the information not including the personally identifiable information as the output data.

The cloud-side information processing device determines a device to be the deployment destination of each SW component in accordance with the characteristics of each SW component and the user's request.

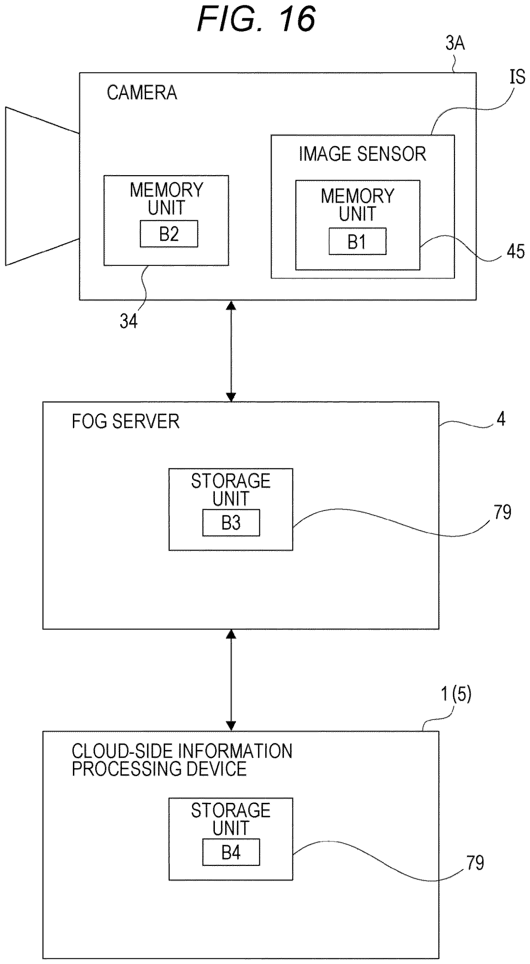

Fig. 16 illustrates a deployment example of each SW component.

In a case where the SW component B1 is stored in the memory unit 45 of the image sensor IS included in the camera 3A, the face detection processing by the SW component B1 is executed in the image sensor IS.

Since the processing of the SW component B1 is realized in the image sensor IS, the personally identifiable information is not output to the outside of the image sensor IS, and thus the privacy protection and the improvement of security are firmly achieved.

As the SW component B2 is stored in the memory unit 34 of the camera 3A, the attribute information extraction processing by the SW component B2 is realized by the processing unit of the camera 3A.

As the SW component B3 is stored in the storage unit 79 of the fog server 4, the aggregation processing by the SW component B3 is realized by the processing unit of the fog server 4.

Since the plurality of cameras 3 is connected to the fog server 4, it is easy to collect the output data from each camera 3. Accordingly, it is preferable for the fog server 4 to count the number of people.

As the SW component B4 is stored in the storage unit 79 of the cloud-side information processing device, the visualization processing by the SW component B4 is realized by the processing unit of the cloud-side information processing device.

The user can browse the result of the visualization processing by the cloud-side information processing device using the application user terminal 2B.

Note that the cloud server 1 may further include another SW component, and result information (in the present embodiment, output data such as the result of visualization processing by the SW component B4) of the AI application Al may be input to another SW component. That is, the output data of each SW component is appropriately output to one or a plurality of other SW components, and various kinds of processing is executed in each of the other SW components, so that it is possible to present various analysis results to the user, and furthermore, it is possible to customize various combinations of information to be presented to the user.

Note that the example illustrated in Fig. 16 can also be said to be an example in which each SW component is equally allocated to each storage unit (memory unit). That is, by deploying each SW component in this way, it is possible to prevent the processing load from being biased to some devices. In other words, in a case where the user sets to uniformize the processing load, the device to be the deployment destination may be determined as illustrated in Fig. 16.

Various requests by the user can be considered. For example, there are a case where it is desired to focus on the cost suppression, a case where it is desired to focus on the execution speed, and a case where it is desired to focus on the privacy protection.

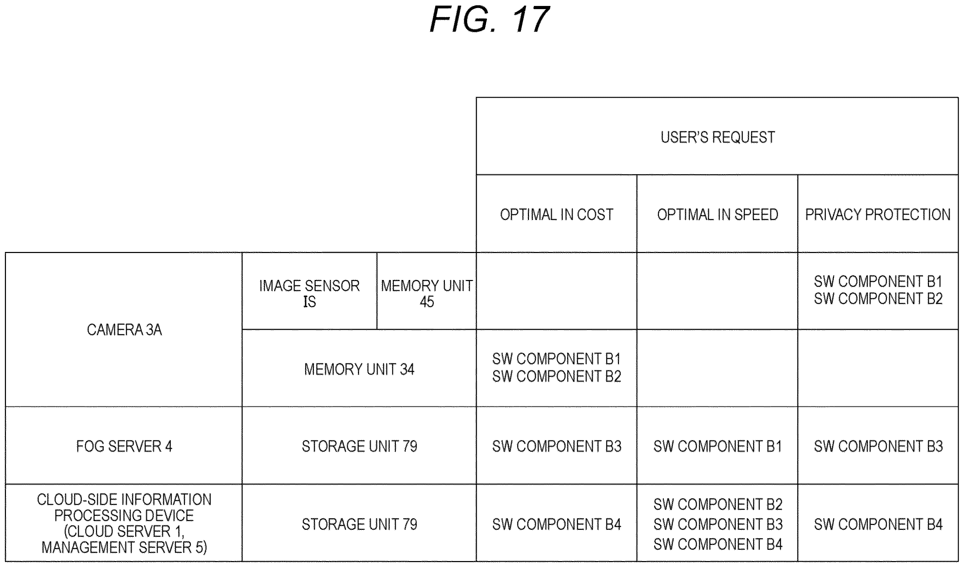

Fig. 17 illustrates an example in which the device to be the deployment destination of each SW component is different for each request of the user.

In a case where the user's request is optimal in cost, for example, it is conceivable to suppress the application usage fee due to continuous use of the function provided by the cloud information processing device by deploying as many SW components as possible in the edge-side information processing device.

The example illustrated in Fig. 17 is an example in which only the visualization processing is performed by the cloud-side information processing device, and the other processing is performed by the edge-side information processing device.

Specifically, the face detection processing and the attribute information extraction processing by the SW components B1 and B2 are executed in the camera 3A, and the aggregation processing by the SW component B3 is executed in the fog server 4.

Note that, for example, in a case where the SW component B4 performs simple visualization processing (for example, processing for displaying on a display device included in the cloud-side information processing device) or the like, since the device to be the deployment destination of the SW component B4 is the cloud-side information processing device, there is a high possibility that the deployment has already been performed, and in that case, the deployment processing in the cloud-side information processing device may not be executed again.

In a case where the user's request is optimal in speed, a high-performance device having a large amount of computation per unit time is likely to be selected as the device to be the deployment destination to execute processing.

In the example illustrated in Fig. 17, only the SW component B1 is executed by the fog server 4 that is the edge-side information processing device. This is because, since the input data of the SW component B1 is image data, it is determined that the face detection processing by the SW component B1 should be completed by the edge-side information processing device in consideration of the communication speed between the edge-side information processing device and the cloud-side information processing device.

Furthermore, the reason why the fog server 4 is selected as the device to be the deployment destination among the edge-side information processing devices is that the processing capability of the fog server 4 is higher than the processing capability of the camera 3A.

In a case where the communication speed between the camera 3A and the fog server 4 is slow and the processing time becomes long by transmitting the image data to the fog server 4, the camera 3A or the image sensor IS may be selected as the device to be the deployment destination of the SW component B1.

In a case where the user's request is privacy protection, a device to be the deployment destination of each SW component is selected such that personally identifiable information capable of identifying an individual, for example, captured image data capable of recognizing a face of a store visitor, is not transmitted to the cloud-side information processing device.

More preferably, the captured image data can be generated in the image sensor IS, but stronger privacy protection can be achieved by preventing the captured image data from being output to the outside of the image sensor IS.

The example illustrated in Fig. 17 is an example in which the face detection processing and the attribute information extraction processing by the SW components B1 and B2 are determined to be executed in the image sensor IS of the camera 3A.

Note that the device to be the deployment destination of each SW component may be determined in consideration of a connection mode (network topology) of the device.

For example, the SW component B3 is aggregation processing of counting the number of people, and is an SW component that uses a store visitor detected on the basis of the captured image data captured by various cameras 3 and attribute information thereof. Accordingly, in a case where the SW component B3 is deployed in the camera 3A or the image sensor IS, processing of receiving extraction results from various devices needs to be performed in the camera 3A or the image sensor IS.

In order to realize such a mode, it is preferable that the camera 3 to be the deployment destination is configured to be able to communicate with another camera 3.

However, as illustrated in Fig. 1, since the cameras 3 are connected to each other via the fog server 4, the processing load required for communication processing in each device is increased.

Accordingly, as illustrated in Fig. 17, the device to be the deployment destination of the SW component B3 may be the fog server 4 or any of the cloud-side information processing devices. That is, in a case where the cloud-side information processing device is on the upstream side and the camera 3 is on the downstream side, the device to be the deployment destination of the SW component may be determined such that the flow of data from the preceding-stage SW component to the subsequent-stage SW component does not go in a direction from upstream to downstream. In other words, the subsequent-stage SW component may be deployed in the device on the upstream side.

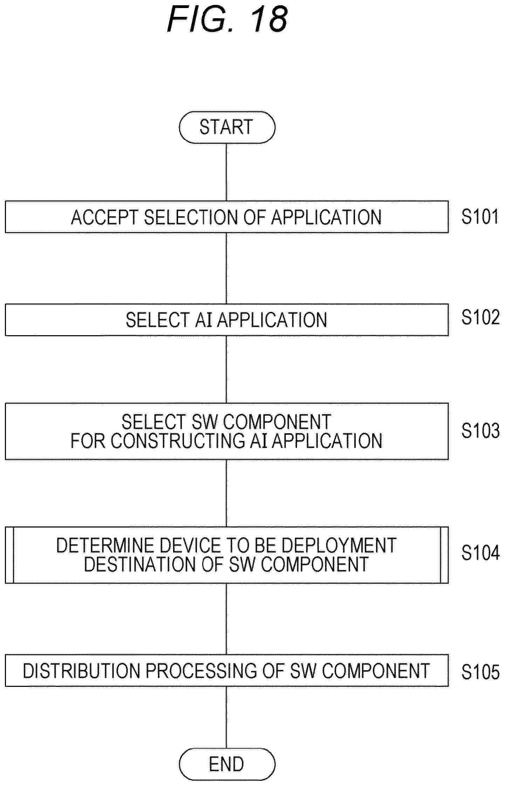

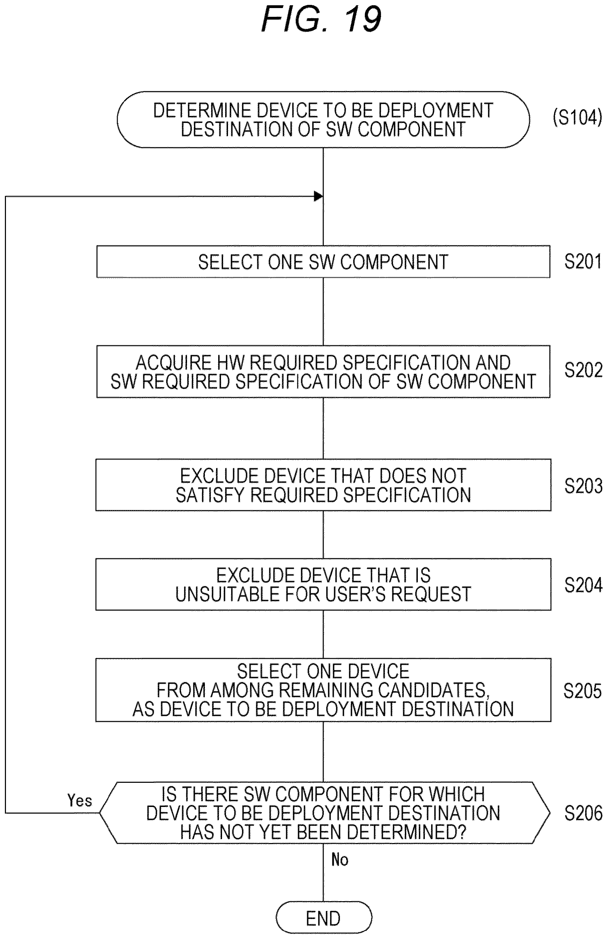

An example of a flow of processing executed by the cloud-side information processing device in order to determine the device to be the deployment destination of each SW component is illustrated in Figs. 18 and 19. Note that Fig. 18 illustrates in detail each processing of steps S9, S10, and S11 in Fig. 4 described above.

In step S101, the CPU 71 of the cloud-side information processing device performs processing of accepting selection of an application. Through this processing, an application such as traffic monitoring, movement flow analysis, or store visitor counting selected by the user is specified.

In step S102, the CPU 71 of the cloud-side information processing device selects an AI application according to the selected application. In this processing, the AI application may be selected not only on the basis of the application selected by the user but also on the basis of the user environment for realizing the application.

In other words, one AI application may be selected from among a plurality of AI applications according to the user environment.

In step S103, the CPU 71 of the cloud-side information processing device selects the SW component for constructing the AI application.

In step S104, the CPU 71 of the cloud-side information processing device determines the device to be the deployment destination for each SW component. This processing will be described again with reference to Fig. 19.

In step S105, the CPU 71 of the cloud-side information processing device performs distribution processing of the SW component.

Therefore, the deployment processing of the SW component distributed in each device is performed.

A specific example of the processing of step S104 of determining the device to be the deployment destination for each SW component is illustrated in Fig. 19.

In step S201, the CPU 71 of the cloud-side information processing device selects one SW component as a processing target.

In step S202, the CPU 71 of the cloud-side information processing device acquires the HW required specification and the SW required specification of the SW component (refer to Fig. 13).

In step S203, the CPU 71 of the cloud-side information processing device excludes the device that does not satisfy the required specifications. In this processing, specification information of each device of both the edge-side information processing device and the cloud-side information processing device is acquired and compared with the required specifications, and thus the device that does not satisfy the required specifications is specified and excluded.

Note that the specification information of each device of both the edge-side information processing device and the cloud-side information processing device may be acquired in advance when the devices are connected.

In step S204, the CPU 71 of the cloud-side information processing device further excludes the device that is unsuitable for the user's request.

In this processing, for example, in a case where the user's request is a processing speed, a device of which the processing time is longer than a predetermined time is excluded, or in a case where the user's request is privacy protection, a cloud-side information processing time is excluded so that it is not necessary to transmit the personally identifiable information to the cloud-side information processing device.

In step S205, the CPU 71 of the cloud-side information processing device selects one device from among the remaining candidate devices, as the device to be the deployment destination. In this selection, the most appropriate device may be selected according to the user's request.

In step S206, the CPU 71 of the cloud-side information processing device determines whether or not there is an SW component for which the device to be the deployment destination has not yet been determined.

In a case where there is an SW component for which the determination has not yet been made, the CPU 71 of the cloud-side information processing device returns to step S201, selects one SW component for which the determination has not yet been made, and proceeds to step S202.

On the other hand, in a case where there is no SW component for which the determination has not yet been made, that is, in a case where the determination of the device to be the deployment destination has been completed for all the SW components, the CPU 71 of the cloud-side information processing device terminates the series of processing illustrated in Fig. 19.

### <3. Second Embodiment>

In the second embodiment, an appropriate SW component is selected according to a situation from among a plurality of SW components having the same processing content. Therefore, the AI model is also selected.

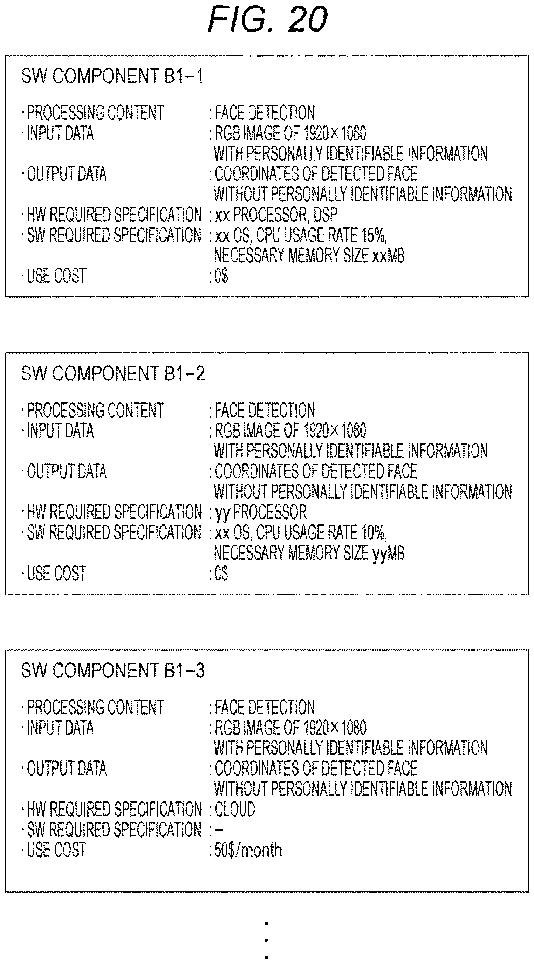

Fig. 20 illustrates that three kinds of SW components B1-1, B1-2, and B1-3 are prepared as the SW component B1 that performs face detection.

Specifically, the SW component B1-1 and the SW component B1-2 have different HW required specifications and SW required specifications. Furthermore, the SW component B1-3 has higher performance than the SW components B1-1 and B1-2, and has higher use cost than the SW components B1-1 and B1-2.

In the cloud-side information processing device, one of the SW components B1-1, B1-2, and B1-3 is selected as the SW component B1 that is one of the SW components for realizing the function as the AI application A1.

Similarly, in a case where a plurality of kinds of SW components is prepared for the SW component B2 and the SW component B3, one SW component is selected from the plurality of kinds of SW components.

Note that different SW components may be selected for each camera 3.

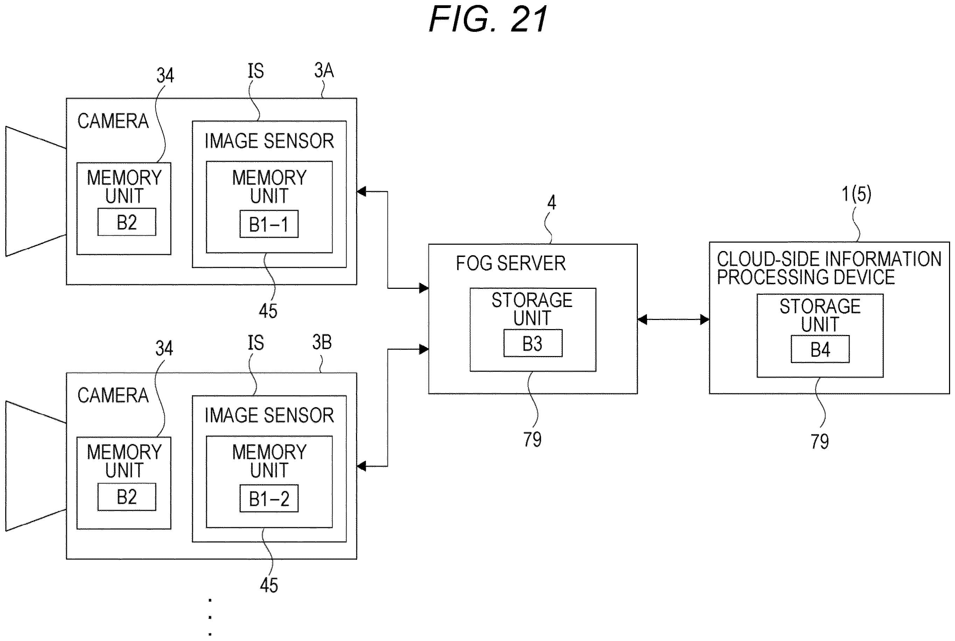

A specific example is illustrated in Fig. 21.

The camera 3A and the camera 3B connected to the fog server 4 have different HW specifications and SW specifications. Then, the camera 3A satisfies both the HW required specification and the SW required specification of the SW component B1-1, and does not satisfy at least a part of the HW required specification and the SW required specification of the SW component B1-2.

Similarly, the camera 3B does not satisfy at least a part of the HW required specification and the SW required specification of the SW component B1-1, and satisfies both the HW required specification and the SW required specification of the SW component B1-2.

At this time, the cloud-side information processing device determines to deploy the SW component B1-1 in the camera 3A, and determines to deploy the SW component B1-2 in the camera 3B.

In this manner, an appropriate SW component is deployed in accordance with the specification and the like of each device included in the user environment, and thus the AI application can be suitably implemented in the user environment.

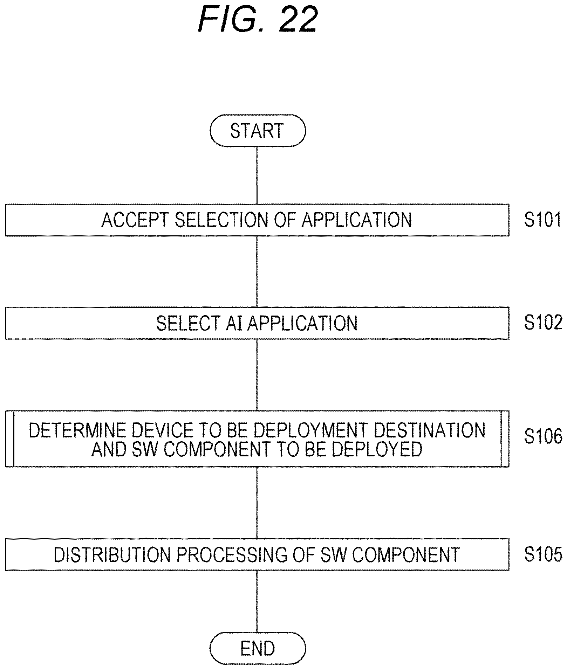

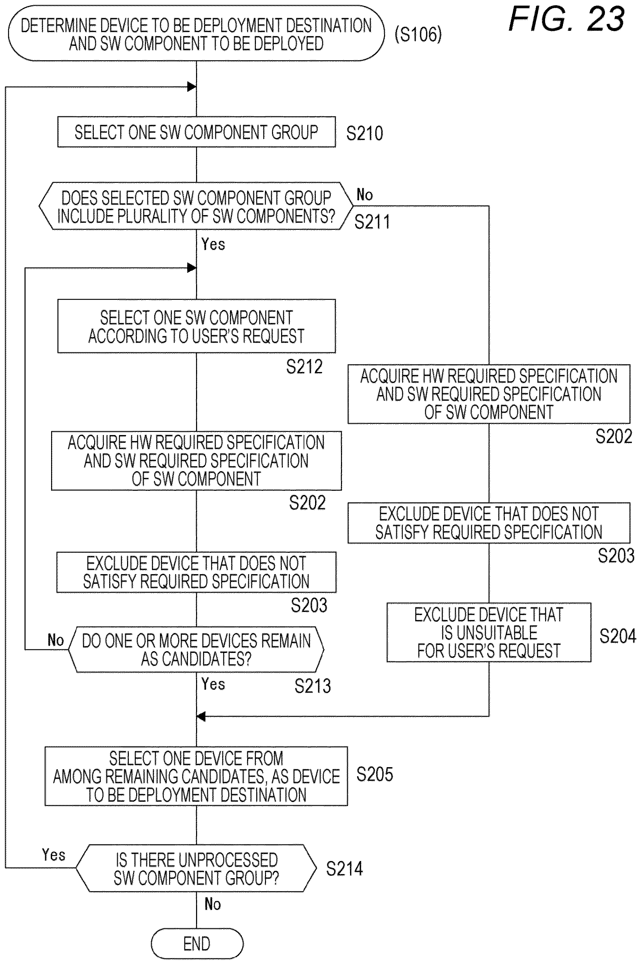

A flow of processing executed by the cloud-side information processing device in order to determine the SW component to be deployed and the device to be the deployment destination is illustrated in Figs. 22 and 23.

Note that processing similar to that in Figs. 18 and 19 described above is denoted by the same step number, and description thereof is omitted as appropriate.

In describing the flow of processing, the SW components B1-1, B1-2, and B1-3 described above are referred to as a "SW component group". That is, the SW component group includes one or more SW components having the same processing content (for example, face recognition).

In step S101 of Fig. 22, the CPU 71 of the cloud-side information processing device specifies an application by performing processing of accepting the selection of the application.

In step S102, the CPU 71 of the cloud-side information processing device selects an AI application according to the selected application.

The CPU 71 of the cloud-side information processing device performs processing of determining the device to be the deployment destination and the SW component to be deployed in step S106, and performs distribution processing of the SW component in step S105.

The processing of determining the device to be the deployment destination and the SW component to be deployed in step S106 is specifically illustrated in Fig. 23.

In step S210, the CPU 71 of the cloud-side information processing device selects one SW component group.

In step S211, the CPU 71 of the cloud-side information processing device determines whether or not the selected SW component group includes a plurality of SW components.

In a case where it is determined that a plurality of SW components is included, the CPU 71 of the cloud-side information processing device selects one SW component according to the user's request in step S212.

For example, in a case where the user's request is a processing speed, one SW component having a high processing speed is selected. Here, as the SW component having a high processing speed, the SW component having a processing speed higher than the average processing speed of respective SW components included in the SW component group may be selected, or the SW component having the highest processing speed may be selected.

Furthermore, in a case where the user's request is optimal in cost, the SW component with low use cost is selected. For example, in the example illustrated in Fig. 20, one of the SW components B1-1 and B1-2 is selected. At this time, the SW component may be selected in further consideration of the introduction cost described above.

The CPU 71 of the cloud-side information processing device acquires the HW required specification and the SW required specification of the selected SW component in step S202, and performs processing of excluding a device that does not satisfy the required specifications in subsequent step S203.

Next, in step S213, the CPU 71 of the cloud-side information processing device determines whether or not one or more devices remain as candidates.

In a case where no candidate device remains, the CPU 71 of the cloud-side information processing device returns to step S212 again to select one SW component, and determines whether there is an appropriate device for deploying the SW component.

On the other hand, in a case where one or more candidate devices remain, the CPU 71 of the cloud-side information processing device selects one device as the device to be deployment destination in step S205, and determines whether or not there is an unprocessed SW component group in step S214.

In a case where there is an unprocessed SW component group, the CPU 71 of the cloud-side information processing device returns to step S210, selects one of the unprocessed SW component groups, and continues the similar processing.

In a case where it is determined in step S211 that there is only one SW component included in the selected SW component group, the CPU 71 of the cloud-side information processing device executes steps S202, S203, and S204, and proceeds to step S205.

Therefore, an appropriate device is selected as the device to be the deployment destination according to the HW required specification and the SW required specification of the SW component.

Note that, in the present example, an example in which one SW component is selected in step S212 has been described, but a plurality of SW components that satisfies the user's request may be selected.

For example, in a case where the user's request is a processing speed, both the SW component that operates on a first OS and has a high processing speed and the SW component that operates on a second OS and has a high processing speed may be selected.

In this case, the device in which none of the two SW components can be deployed is excluded on the basis of the required specification in step S203, and then one of the remaining devices as the candidates is selected in step S205. Then, after step S205, one SW component that can be deployed in the device is only required to be finally selected.

### <4. Third Embodiment>

A third embodiment is an example in which a part of the device to be the deployment destination is regarded as a "device group".

For example, the memory unit 34 of the camera 3 and the memory unit 45 of the image sensor IS included in the camera 3 are regarded as a device group (storage unit group).

In the above example, in a case where the image sensor IS does not satisfy the necessary memory size as the SW required specification of the SW component as the deployment target, the image sensor IS is excluded from the candidates for the device to be the deployment destination.

Moreover, in a case where the camera 3 on which the image sensor IS is mounted does not satisfy the request for the necessary memory size, the camera 3 is excluded from the candidates for the device to be the deployment destination.

In this case, the SW component is deployed in the fog server 4 or the cloud-side information processing device.

On the other hand, in the present example, the memory unit 34 of the camera 3 and the memory unit 45 of the image sensor IS are regarded as the device group, and it is determined whether or not the SW required specification of the SW component as the deployment target is satisfied by combining both the memory unit 34 and the memory unit 45.

Then, in a case where the required specification of the SW component can be satisfied by combining both the memory unit 34 and the memory unit 45, the camera 3 may be selected as the device to be the deployment destination.

As another example of the third embodiment, it is conceivable to regard a plurality of cameras 3 as a camera group 10.

For example, it is assumed that the camera group 10 connected to the fog server 4 includes three cameras 3A, 3B, and 3C.

A case is considered in which a certain SW component C1-1 is deployed in each of the cameras 3A, 3B, and 3C. In a case where the camera 3C does not satisfy the required specifications of the SW component, an SW component C1-2 and the like having lower performance than the SW component C1-1 that has been initially selected according to the HW specification and the SW specification of the camera 3C may be selected again and deployed in each of the cameras 3A, 3B, and 3C.

However, in the present embodiment, since the cameras 3A, 3B, and 3C are regarded as one camera group 10, whether the processing load of the camera 3C can be compensated by the camera 3A and the camera 3B is considered. Then, in a case where it is determined that the processing load can be compensated, the SW component C1-1 that has been initially selected may be deployed in each of the cameras 3A, 3B, and 3C.

Then, when the processing by the SW component C1-1 is executed, the cameras 3A and 3B take over a part of the processing to be executed by the camera 3C, and thus it is possible to realize analysis processing or the like using the SW component C1-1 with high performance as the camera group 10.

For example, in a case where the average performance of the cameras 3A, 3B, and 3C exceeds the required specification of the SW component, the camera group 10 including the cameras 3A, 3B, and 3C is only required to be selected as the device to be the deployment destination.

Specifically, in a case where the third embodiment is applied to the first embodiment, in step S203 illustrated in Fig. 19, in a case where the average performance of the device group does not satisfy the required specifications of the SW component, the device group is only required to be excluded.

Furthermore, in a case where the third embodiment is applied to the second embodiment, similar processing is only required to be performed in step S203 in Fig. 23.

### <5. Others>

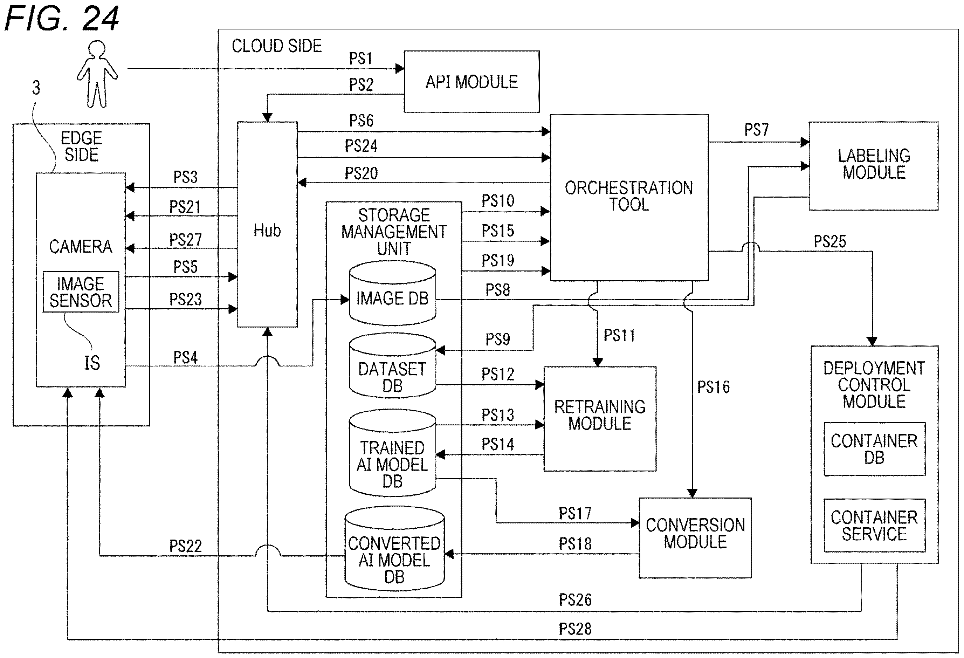

As described above, the flow of processing when retraining of the AI model and updating of the AI application and the AI model (hereinafter referred to as "edge-side AI model") deployed in each camera 3 are performed with the operation of the service provider or the user (user) as a trigger after the SW component and the AI model of the AI application are deployed will be specifically described with reference to Fig. 24. Note that Fig. 24 focuses on one camera 3 among the plurality of cameras 3. Furthermore, the edge-side AI model to be updated in the following description is deployed in the image sensor IS included in the camera 3 as an example, but of course, the edge-side AI model may be deployed outside the image sensor IS in the camera 3.

First, in processing step PS1, the service provider or the user gives a retraining instruction of the AI model. This instruction is made using an application programming interface (API) function of an API module included in the cloud-side information processing device. Furthermore, in the instruction, an image amount (for example, the number of images) used for training is designated. Hereinafter, the image amount used for training may be referred to as a "predetermined number of images".

In response to the instruction, the API module transmits a retraining request and information regarding the image amount to a Hub (similar to those illustrated in Fig. 5) in processing step PS2.

In processing step PS3, the Hub transmits an update notification and the information regarding the image amount to the camera 3 as the edge-side information processing device.

In processing step PS4, the camera 3 transmits captured image data obtained by executing imaging to an image database (DB) of a storage group. The imaging processing and the transmission processing are performed until a predetermined number of images necessary for retraining is achieved.

Note that, in a case where the camera 3 obtains an inference result by performing inference processing on the captured image data, the camera 3 may store the inference result in the image DB as metadata of the captured image data in processing step PS4.

Since the inference result in the camera 3 is stored as metadata in the image DB, it is possible to carefully select the data necessary for retraining of the AI model executed on the cloud side. Specifically, the retraining can be performed using only the image data in which the inference result in the camera 3 is different from a result of inference executed using abundant computer resources in the cloud-side information processing device. Accordingly, a time required for retraining can be shortened.

After the capturing and transmission of the predetermined number of images are finished, the camera 3 notifies the Hub that the transmission of the data of the predetermined number of captured images has been completed in processing step PS5.

In response to the notification, the Hub notifies the orchestration tool that preparation of the data for retraining has been completed in processing step PS6.

In processing step PS7, the orchestration tool transmits an execution instruction of labeling processing to a labeling module.

The labeling module acquires the image data which is a target of the labeling processing, from the image DB (processing step PS8), and performs the labeling processing.

The labeling processing herein may be processing of performing the class identification described above, processing of estimating the gender and the age of the subject of the image and giving a label, processing of estimating the pose of the subject and giving a label, or processing of estimating the behavior of the subject and giving a label.

The labeling processing may be performed manually or automatically. Furthermore, the labeling processing may be completed in the cloud-side information processing device or may be realized by using a service provided by another server device.

The labeling module that has completed the labeling processing stores the labeled result information in the dataset DB in processing step PS9. Here, the information stored in the dataset DB may be a set of label information and image data, or may be image identification (ID) information for identifying image data instead of the image data itself.

A storage management unit that has detected that the labeled result information has been stored gives a notification to the orchestration tool in processing step PS10.

The orchestration tool that has received the notification checks that the labeling processing for the data of the predetermined number of images has ended, and transmits a retraining instruction for the retraining module in processing step PS11.

The retraining module that has received the retraining instruction acquires the dataset used for training from the dataset DB in processing step PS12, and acquires the updating target AI model from the trained AI model DB in processing step PS13.

The retraining module retrains the AI model by using the acquired dataset and AI model. The updated AI model obtained in this manner is stored again in a retrained AI model DB in processing step PS14.

The storage management unit that has detected that the updated AI model is stored gives a notification to the orchestration tool in processing step PS15.

The orchestration tool that has received the notification transmits a conversion instruction of the AI model to a conversion module in processing step S16.

In processing step PS17, the conversion module that has received the conversion instruction acquires the updated AI model from the trained AI model DB, and performs the conversion processing of the AI model.

In the conversion processing, processing of performing conversion in accordance with specification information or the like of the camera 3, which is the apparatus to be the deployment destination, is performed. In this processing, downsizing is performed so as not to degrade the performance of the AI model as much as possible, and file format conversion or the like is performed so as to be operable on the camera 3.

The AI model converted by the conversion module is the above-described edge-side AI model. This converted AI model is stored in a converted AI model DB in processing step PS18.

The storage management unit that has detected that the converted AI model is stored gives a notification to the orchestration tool in processing step PS19.

In processing step PS20, the orchestration tool that has received the notification transmits a notification for executing update of the AI model to the Hub. This notification includes information for specifying a location where the AI model used for the update is stored.

The Hub that has received the notification transmits an update instruction of the AI model to the camera 3. The update instruction also includes information for specifying a location where the AI model is stored.

In processing step PS22, the camera 3 executes processing of acquiring the target converted AI model from the converted AI model DB and deploying the target converted AI model. Therefore, the AI model used in the image sensor IS of the camera 3 is updated.

The camera 3 completing the update of the AI model by deploying the AI model transmits an update completion notification to the Hub in processing step PS23.

The Hub that has received the notification notifies the orchestration tool that the AI model update processing of the camera 3 has been completed in processing step PS24.

Note that, although the example in which the AI model is deployed and used in the image sensor IS (for example, the memory unit 45 illustrated in Fig. 7) of the camera 3 has been described here, the AI model can be similarly updated even in a case where the AI model is deployed and used outside the image sensor (for example, the memory unit 34 in Fig. 7) in the camera 3 or in the fog server 4 (the storage unit 79 in Fig. 14).

In that case, in a case where the AI model is deployed, a device (location) in which the AI model is deployed is stored in a cloud-side storage management unit or the like, and the Hub reads the device (location) in which the AI model is deployed from the storage management unit, and transmits an update instruction of the AI model to the device in which the AI model is deployed.

In processing step PS22, the device that has received the update instruction performs processing of acquiring the target converted AI model from the converted AI model DB and deploying the target converted AI model. Therefore, the AI model of the device that has received the update instruction is updated.

Note that, in a case where only the update of the AI model is performed, the processing performed so far is completed.

In addition to the AI model, in a case where the AI application using the AI model is updated, processing to be described later is further executed.

Specifically, in processing step PS25, the orchestration tool transmits a download instruction of the AI application such as updated firmware to a deployment control module.

In processing step PS26, the deployment control module transmits a deployment instruction of the AI application to the Hub. This instruction includes information for specifying a location where the updated AI application is stored.

In processing step PS27, the Hub transmits the deployment instruction to the camera 3.

In processing step PS28, the camera 3 downloads the updated AI application from a container DB of the deployment control module and deploys the updated AI application.

Note that, in the description described above, the example has been described in which the update of the AI model operating on the image sensor IS of the camera 3 and the update of the AI application operating outside the image sensor IS in the camera 3 are sequentially performed.

Furthermore, although the description has been made using an AI application here for simplicity of description, as described above, the AI application is defined by a plurality of SW components such as the SW components B1, B2, B3, ..., and Bn. When the AI application is deployed, where each SW component is deployed is stored in the cloud-side storage management unit or the like, and when processing step PS27 is performed, the Hub reads the device (location) in which each SW component is deployed from the storage management unit, and transmits a deployment instruction to the device in which the SW component is deployed. In processing step PS28, the device that has received the deployment instruction downloads the updated SW components from the container DB of the deployment control module, and deploys the updated SW components.

Note that, the AI application here is an SW component other than the AI model.

Furthermore, in a case where both the AI model and the AI application operate in one device, both the AI model and the AI application may be collectively updated as one container. In this case, the update of the AI model and the update of the AI application may be performed not sequentially but simultaneously. Then, it can be realized by executing each processing of processing steps PS25, PS26, PS27, and PS28.

For example, in a case where both the containers of the AI model and the AI application can be deployed in the image sensor IS of the camera 3, the AI model and the AI application can be updated by executing each processing of processing steps PS25, PS26, PS27, and PS28, as described above.

By performing the above-described processing, retraining of the AI model is performed using the captured image data captured in the use environment of the user. Accordingly, it is possible to generate the edge-side AI model capable of outputting a highly accurate recognition result in the use environment of the user.

Furthermore, even in a case where the use environment of the user is changed, for example, in a case where the layout in the store is changed or the installation place of the camera 3 is changed, the AI model can be appropriately retrained each time, and thus, it is possible to maintain the recognition accuracy by the AI model without deterioration of the recognition accuracy.

Note that each processing described above may be executed not only when the AI model is retrained but also when the system is operated for the first time under the use environment of the user.

### <6. Screen Example of Marketplace>

An example of a screen presented to the user regarding the marketplace will be described with reference to each drawing.

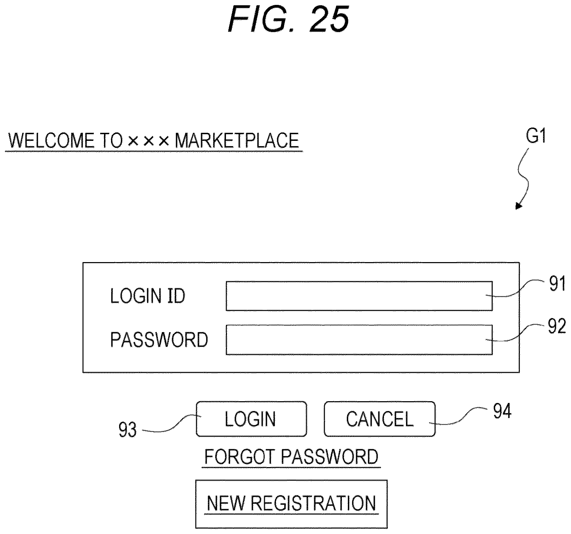

Fig. 25 illustrates an example of a login screen G1.

On the login screen G1, an ID input field 91 for inputting the user ID (login ID) and a password input field 92 for inputting a password are provided.

A login button 93 for performing login and a cancel button 94 for canceling login are arranged below the password input field 92.

Furthermore, an operator for transitioning to a page for a user who forgot a password, an operator for transitioning to a page for newly performing user registration, and the like are appropriately arranged below the buttons.

In a case where an appropriate user ID and password are input and then the login button 93 is pressed, processing of transitioning to a user-specific page is executed in each of the cloud server 1 and the user terminal 2.

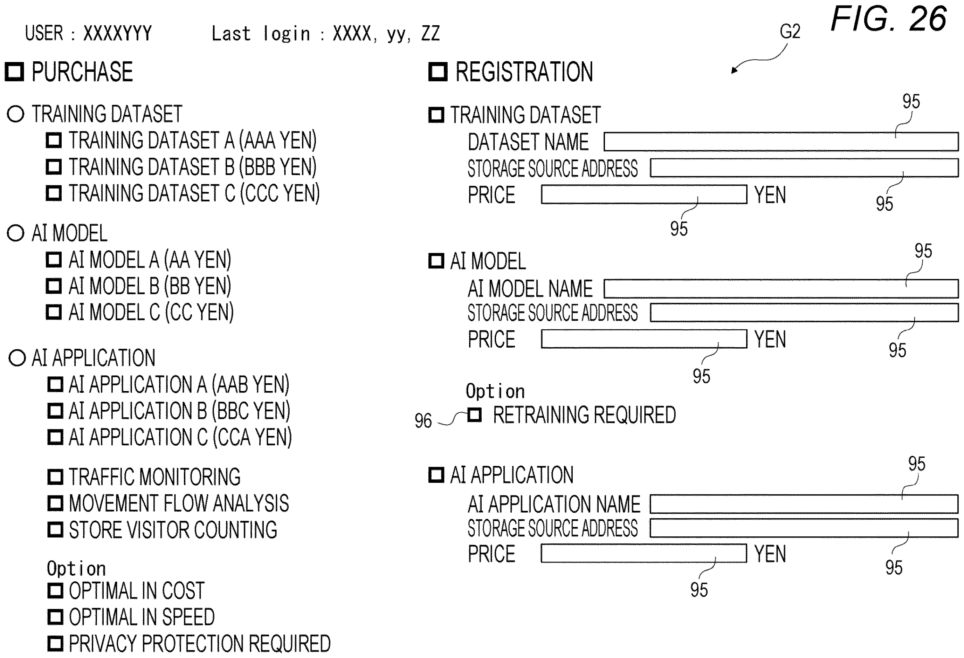

Fig. 26 illustrates an example of a screen presented to, for example, an AI application developer using the application developer terminal 2A, and an AI model developer using the AI model developer terminal 2C.

Each developer can purchase the training dataset, the AI model, and the AI application through a marketplace for development. Furthermore, an AI application or an AI model developed by the developer can be registered in the marketplace.

On a developer-oriented screen G2 illustrated in Fig. 26, training datasets, AI models, AI applications, and the like (hereinafter, collectively referred to as "data") that can be purchased are displayed on the left side.

Note that, although not illustrated, when the learning dataset is purchased, preparation for training can be performed simply by displaying an image of the training dataset on a display, surrounding only a desired portion of the image with a frame using an input device such as a mouse, and inputting a name.

For example, in a case where it is desired to perform AI learning using a cat image, it is possible to prepare images to which a cat annotation is added for the AI learning by surrounding only a cat portion on the image with a frame and inputting "cat" as a text input.

Furthermore, it is possible to make it possible to select a purpose such as "traffic monitoring", "movement flow analysis", or "store visitor counting" so that desired data can be easily found. That is, display processing of displaying only data appropriate for the selected purpose is executed in each of the cloud server 1 and the user terminal 2.

Note that a purchase price of each piece of data may be displayed on the developer-oriented screen G2.

Furthermore, an input field 95 for registering a training dataset collected or generated by the developer, or an AI model or an AI application developed by the developer is provided on the right side of the developer-oriented screen G2.

The input field 95 for inputting a name or a data storage location is provided for each piece of data. Furthermore, for the AI model, a check box 96 for setting necessity or unnecessity of retraining is provided.

Note that a price setting field (described as the input field 95 in Fig. 26) or the like in which a price necessary for purchasing the registration target data can be set may be provided.

Furthermore, on the upper portion of the developer-oriented screen G2, a user name, a final login date, and the like are displayed as part of the user information. Note that, in addition to this, the amount of currency, the number of points, and the like that can be used when the user purchases data may be displayed.

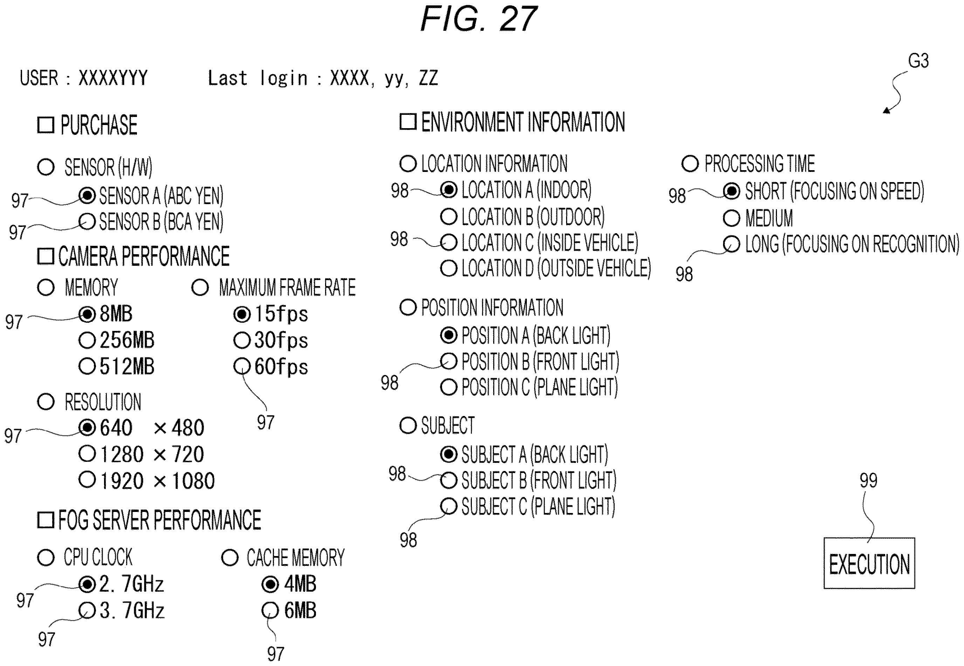

Fig. 27 illustrates an example of a user-oriented screen G3 presented to a user (the above-described application using user) who performs various kinds of analysis and the like, for example, by deploying the AI application and the AI model in the camera 3 that is the edge-side information processing device managed by the user.

The user can purchase the camera 3 arranged in a space as the monitoring target via the marketplace. Accordingly, radio buttons 97 with which the type or the performance of the image sensor IS mounted on the camera 3, the performance of the camera 3, and the like can be selected are arranged on the left side of the user-oriented screen G3.

Furthermore, the user can purchase the information processing device as the fog server 4 via the marketplace. Accordingly, the radio buttons 97 for selecting each performance of the fog server 4 are arranged on the left side of the user-oriented screen G3.

Furthermore, the user who already has the fog server 4 can register the performance of the fog server 4 by inputting the performance information of the fog server 4 here.

The user realizes a desired function by installing the purchased camera 3 (alternatively, the camera 3 purchased without going through the marketplace may be used) in an arbitrary place such as a store managed by the user, and in order to maximize the function of each camera 3, the information regarding the installation place of the camera 3 can be registered in the market place.

Radio buttons 98 with which environment information regarding the environment in which the camera 3 is installed can be selected are arranged on the right side of the user-oriented screen G3. The user sets the above-described optimum imaging setting in the target camera 3 by appropriately selecting the environment information regarding the environment in which the camera 3 is installed.

Note that, in a case where the camera 3 is purchased and the location where the camera 3 scheduled to be purchased is installed is determined, it is possible to purchase the camera 3 in which an optimum imaging setting is set in advance in accordance with the installation scheduled location by selecting each item on the left side and each item on the right side of the user-oriented screen G3.

The user-oriented screen G3 is provided with an execution button 99. By pressing the execution button 99, it is possible to transition to a confirmation screen for confirming the purchase or a confirmation screen for confirming the setting of the environment information. Therefore, the user can purchase a desired camera 3 or a desired fog server 4, and can set environmental information regarding the camera 3.

In the marketplace, it is possible to change the environment information of each camera 3 for a time at which the installation location of the camera 3 is changed. When the environment information regarding the installation location of the camera 3 is input again on a change screen (not illustrated), it is possible to reset the optimum imaging setting for the camera 3.

### <7. Conclusion>

As described in each example described above, the cloud-side information processing device (the cloud server 1 or the management server 5) includes a determination processing unit (the camera service function F5) that determines a target (device and the like) to be an execution subject for each SW component according to the user's request for an application (for example, an AI application) and a required specification of the software component (SW component) constructing the application.

That is, the target (the device or the like to be the deployment destination) to be the execution subject of the software component is determined in consideration of not only the performance and the like of the device but also the user's request for the application.

Accordingly, not only the device that cannot be the target to be the execution subject of the SW component in terms of performance is excluded, but also the device inappropriate for the user's request is excluded, and then the target to be the execution subject is determined.

Therefore, each SW component is deployed such that the application exerts appropriate performance according to the user's request.

Furthermore, since the target to be the execution subject can be determined by comparing the required specification of the SW component with the specification of the candidate for the target to be the execution subject, it is not necessary to construct a simulation environment for executing the application and perform simulation in advance, and it is possible to reduce the processing load and shorten the time until the deployment is completed.

Note that, as the application selected by the user, in addition to the above-described examples, there are various conceivable applications such as "understanding and analyzing consumer behavior", "missing item detection", "user number counting", "user number prediction", "user tracking", "congestion detection", "congestion analysis", "danger sensing", "barcode reading", "intruder detection in dangerous area", "detection of inappropriate dangerous article handling method", "helmet/mask wearing detection", "pedestrian counting", and "line detection".

As described above, the application may include a plurality of software components (SW components), and the determination processing unit (the camera service function F5) may determine a plurality of targets as the targets to be execution subjects for the plurality of software components.

Therefore, it is possible to prevent a plurality of SW components that realizes the application from being deployed in one device.

Accordingly, since the application can be realized by the distributed processing in a plurality of devices, the processing load of each device can be reduced. Furthermore, since the SW components are deployed in a distributed manner, it is possible to reduce the influence when the device fails, and it is possible to improve failure resistance.

As described with reference to Fig. 13 and the like, the required specifications of the software component (SW component) may include information indicating whether or not the personally identifiable information that is information capable of identifying an individual is included in the input data of the software component.

Therefore, the arrangement of the SW component can be determined in consideration of whether or not the SW component is an SW component of which the input data includes the personally identifiable information. Accordingly, the execution subject to be the execution subject of the SW component can be determined so that privacy can be protected.

As described with reference to Fig. 16 and the like, the candidate for the target to be the execution subject may include the edge-side information processing device (the image sensor IS, the camera 3, the fog server 4) and the cloud-side information processing device (the cloud server 1, the management server 5).

Therefore, each SW component can be widely deployed from the edge-side information processing device to the cloud-side information processing device. Accordingly, the processing can be further distributed.

As described with reference to Fig. 16 and the like, the candidates for the target to be the execution subject include the edge-side information processing device (the image sensor IS, the camera 3, the fog server 4) and the cloud-side information processing device (the cloud server 1, the management server 5), and the determination processing unit (the camera service function F5) may determine the edge-side information processing device as the target to be the execution subject for the software component (SW component) in which the personally identifiable information is included in the input data.

Therefore, it is not necessary to transmit the personally identifiable information as the input data to the cloud-side information processing device. Accordingly, the privacy protection can be achieved.

As described with reference to Figs. 16, 17, and the like, the personally identifiable information may be the captured image data.

Therefore, the target to be the execution subject of the SW component is determined according to whether or not the captured image data is included in the input data. Furthermore, by deploying such an SW component in the edge-side information processing device (the image sensor IS, the camera 3, the fog server 4), it is not necessary to transmit the captured image data as the input data to the cloud-side information processing device (the cloud server 1, the management server 5), and thus, it is possible to suppress waste of a communication band.

As described with reference to Figs. 16, 17, and the like, the determination processing unit (the camera service function F5) may determine the image sensor IS as the execution subject for the software component (SW component) in which the captured image data is included in the input data.

Therefore, the personally identifiable information is prevented from being output to the outside the image sensor IS. Accordingly, it is possible to protect the privacy and improve the security.

As described with reference to Fig. 16 and the like, the determination processing unit (the camera service function F5) may determine the image sensor IS as the execution subject for all the software components (SW components) in which the personally identifiable information is included in the input data.

Therefore, since the SW component that handles the input data including the personally identifiable information other than the captured image data is deployed in the image sensor IS, no personally identifiable information is output to the outside of the image sensor IS. Accordingly, it is possible to more firmly protect the privacy and improve the security.

As described with reference to Fig. 16 and the like, the edge-side information processing device may include a camera device (cameras 3, 3A, 3B, and 3C).

It is conceivable that the cloud-side information processing device is used by a large number of users. In this case, in a case where a large number of kinds of processing are executed by the cloud-side information processing device, there is a possibility that computer resources available in the cloud-side information processing device will decrease due to use by other users, resulting in a processing delay or an increase in communication time. However, as in the present configuration, since the SW component that can be executed by the camera 3 (3A, 3B, 3C) is deployed in the camera 3 so that at least a part of the processing is executed in a more distal device, it is possible to achieve distribution of processing sharing, to reduce the processing load of the cloud-side information processing device, to suppress an increase in communication delay, and to suppress an increase in processing time.

As described with reference to Fig. 16 and the like, the camera device (cameras 3, 3A, 3B, and 3C) may include the image sensor IS including the arithmetic processing unit (the in-sensor control unit 43, the AI image processing unit 44) and the arithmetic processing unit (control unit 33) provided outside the image sensor IS, and each of the arithmetic processing unit provided outside the image sensor IS and the image sensor IS may be candidates for the target to be the execution subject.

Therefore, the SW component executed in the image sensor IS and the SW component executed outside the image sensor IS and in the camera 3 can be deployed separately, and the distribution of the processing sharing can be achieved.

As described with reference to Fig. 12 and the like, the required specifications of the software component (SW component) may include the hardware (HW) required specifications and the software (SW) required specifications.

Therefore, not only the device of which the HW specification does not satisfy the required specifications can be excluded from the candidates for the target to be the execution subject, but also the device of which the SW specification does not satisfy the required specifications such as a different installed OS can be excluded from the candidates for the target to be the execution subject.

Accordingly, it is possible to reduce the possibility of deploying the SW component in the device that does not normally operate.

As described with reference to Fig. 12 and the like, the application may include the software component (SW component) that performs processing using an artificial intelligence model (AI model).

Therefore, the various effects described above can be obtained for the application that realizes the user's request using the processing using the AI model.

As described with reference to Fig. 16 and the like, the application may include the software component that performs processing on sensing information (for example, an RGB image) or recognition information (for example, result information of face detection) obtained on the basis of the sensing information.

The sensing information is, for example, data obtained by a visible light sensor, an infrared sensor, a time of flight (ToF) sensor, a thermal sensor, a multi spectrum sensor, and the like. Furthermore, an SW component that handles sensing information other than the image data, such as output data of an acceleration sensor, may be included.

The above-described effects can be obtained for the AI application using these various kinds of sensing information.

As described with reference to Fig. 12 and the like, the sensing information may be the captured image data.

Examples of the image sensor IS for obtaining the captured image data include a visible light sensor, an infrared sensor, a time of flight (ToF) sensor, an event based vision sensor (EVS), a thermal sensor, a multi spectrum sensor, a polarization sensor, a short wavelength infrared (SWIR) sensor, a humidity sensor, and a moisture sensor.

There is a possibility that the processing using such sensor output increases the processing load, and thus the execution environment may be limited.

According to the present configuration, since the SW component for realizing the application can be distributed and deployed in various devices, the processing load can be distributed by allocating an appropriate execution subject even for processing with a large processing load and executing the processing.

In an information processing method according to the present technology, a computer device executes the processing of determining the target to be the execution subject for each software component according to the user's request for the application and the required specifications of the software components constructing the application.

A program to be executed by the above-described information processing device (the cloud server 1, the management server 5) can be recorded in advance in a hard disk drive (HDD) as a recording medium built in an apparatus such as a computer device, a ROM in a microcomputer having a CPU, and the like. Alternatively, the program can be temporarily or permanently stored (recorded) in a removable recording medium such as a flexible disk, a compact disk read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program may be installed from the removable recording medium into a personal computer and the like, or may be downloaded from a download site via a network such as a local area network (LAN) or the Internet.

Note that, the effects described in the present specification are merely examples and are not limited, and other effects may be provided.

Furthermore, the above-described respective examples may be combined in any way, and the above-described various functions and effects may be obtained even in a case where various combinations are used.

### <8. Present Technology>

The present technology can also adopt the following configurations.
(1) An information processing device including:
   a determination processing unit that determines, according to a user's request for an application and a required specification of a software component constructing the application, a target to be an execution subject for each software component.
(2) The information processing device described in (1), in which
   the application is configured by a plurality of software components, and
   the determination processing unit determines a plurality of targets as the target to be the execution subject for the plurality of software components.
(3) The information processing device described in (1) or (2), in which
   the required specification of the software component includes information indicating whether or not personally identifiable information that is information capable of identifying an individual is included in input data of the software component.
(4) The information processing device described in any one of (1) to (3), in which
   an edge-side information processing device and a cloud-side information processing device are included in candidates for the target to be the execution subject.
(5) The information processing device described in (3), in which
   an edge-side information processing device and a cloud-side information processing device are included in candidates for the target to be the execution subject, and
   the determination processing unit determines the edge-side information processing device as the target to be the execution subject for the software component in which the personally identifiable information is included in the input data.
(6) The information processing device described in any one of (3) to (5), in which
   the personally identifiable information is captured image data.
(7) The information processing device described in (6), in which
   the determination processing unit determines an image sensor as the target to be the execution subject for the software component in which the captured image data is included in the input data.
(8) The information processing device described in (7), in which
   the determination processing unit determines the image sensor as the target to be the execution subject for all the software components in which the personally identifiable information is included in the input data.
(9) The information processing device described in (4), in which
   the edge-side information processing device includes a camera device.
(10) The information processing device described in (9), in which
   the camera device includes an image sensor including an arithmetic processing unit, and an arithmetic processing unit provided outside the image sensor, and
   each of the arithmetic processing unit provided outside the image sensor and the image sensor is a candidate for the target to be the execution subject.
(11) The information processing device described in any one of (1) to (10), in which
   the required specification includes a hardware required specification and a software required specification.
(12) The information processing device described in any one of (1) to (11), in which
   the application includes the software component that performs processing using an artificial intelligence model.
(13) The information processing device described in any one of (1) to (12), in which
   the application includes the software component that performs processing on sensing information or recognition information obtained on a basis of the sensing information.
(14) The information processing device described in (13), in which
   the sensing information is captured image data.
(15) An information processing method including:
   executing, by a computer device, processing of determining, according to a user's request for an application and a required specification of a software component constructing the application, a target to be an execution subject for each software component.
(16) A program causing an arithmetic processing device to execute a determination function of determining, according to a user's request for an application and a required specification of a software component constructing the application, a target to be an execution subject for each software component.

### REFERENCE SIGNS LIST

1 Cloud server (information processing device, cloud-side information processing device)
3, 3A, 3B, 3C Camera (edge-side information processing device)
4 Fog server (edge-side information processing device)
5 Management server (information processing device, cloud-side information processing device)
IS Image sensor (edge-side information processing device)
F5 Camera service function (determination processing unit)
B1, B2, B3, B4 SW component
B1-1, B1-2, B1-3, C1-1, C1-2 SW component

## Claims

1. An information processing device comprising:
a determination processing unit that determines, according to a user's request for an application and a required specification of a software component constructing the application, a target to be an execution subject for each software component.

2. The information processing device according to claim 1, wherein
the application is configured by a plurality of software components, and
the determination processing unit determines a plurality of targets as the target to be the execution subject for the plurality of software components.

3. The information processing device according to claim 1, wherein
the required specification of the software component includes information indicating whether or not personally identifiable information that is information capable of identifying an individual is included in input data of the software component.

4. The information processing device according to claim 1, wherein
an edge-side information processing device and a cloud-side information processing device are included in candidates for the target to be the execution subject.

5. The information processing device according to claim 3, wherein
an edge-side information processing device and a cloud-side information processing device are included in candidates for the target to be the execution subject, and
the determination processing unit determines the edge-side information processing device as the target to be the execution subject for the software component in which the personally identifiable information is included in the input data.

6. The information processing device according to claim 3, wherein the personally identifiable information is captured image data.

7. The information processing device according to claim 6, wherein
the determination processing unit determines an image sensor as the target to be the execution subject for the software component in which the captured image data is included in the input data.

8. The information processing device according to claim 7, wherein
the determination processing unit determines the image sensor as the target to be the execution subject for all the software components in which the personally identifiable information is included in the input data.

9. The information processing device according to claim 4, wherein
the edge-side information processing device includes a camera device.

10. The information processing device according to claim 9, wherein
the camera device includes an image sensor including an arithmetic processing unit, and an arithmetic processing unit provided outside the image sensor, and
each of the arithmetic processing unit provided outside the image sensor and the image sensor is a candidate for the target to be the execution subject.

11. The information processing device according to claim 1, wherein
the required specification includes a hardware required specification and a software required specification.

12. The information processing device according to claim 1, wherein
the application includes the software component that performs processing using an artificial intelligence model.

13. The information processing device according to claim 1, wherein
the application includes the software component that performs processing on sensing information or recognition information obtained on a basis of the sensing information.

14. The information processing device according to claim 13, wherein the sensing information is captured image data.

15. An information processing method comprising:
executing, by a computer device, processing of determining, according to a user's request for an application and a required specification of a software component constructing the application, a target to be an execution subject for each software component.

16. A program causing an arithmetic processing device to execute a determination function of determining, according to a user's request for an application and a required specification of a software component constructing the application, a target to be an execution subject for each software component.
